# EUROPEAN PATENT SPECIFICATION

(11) **EP 3 492 407 B1**
(45) Date of publication and mention of the grant of the patent: **26.01.2022**
(21) Application number: 18208551.4
(22) Date of filing: 27.11.2018
(51) Int. Cl.: B65G 1/06

(54) **CONVEYANCE SYSTEM AND METHOD FOR CONVEYING WORKPIECE**
FÖRDERSYSTEM UND VERFAHREN ZUM FÖRDERN VON WERKSTÜCKEN
SYSTÈME DE TRANSPORT ET PROCÉDÉ DE TRANSPORT DE PIÈCE À USINER

(30) Priority: 29.11.2017 JP 2017229559
(43) Date of publication of application: 05.06.2019
(73) Proprietor: Hirata Corporation, Kumamoto-shi, Kumamoto 861-0198 (JP)
(72) Inventor: MURAYAMA, Masashi, Kumamoto-shi, Kumamoto 861-0198 (JP)
(74) Representative: Luten, Martin Haaije

(56) References cited:
- WO-A1-2017/191257
- DE-A1- 3 837 402
- JP-A- 2004 142 902
- JP-A- 2010 189 094
- US-A- 3 817 406

## Description

### Field of the Invention

The present invention relates to a conveyance system which carries-in and carries-out a workpiece between a plurality of shelves in which a workpiece is accommodated and a conveyance device and a method for conveying the workpiece using the conveyance system.

### Description of Related Art

A conveyance system is known which takes out a workpiece accommodated in a plurality of shelves and conveys the workpiece. For example, Japanese Patent No. 5278122 discloses a tray supply device, which includes a tray magazine which can accommodate a tray, on which a plurality of electronic components are mounted, in a plurality of stages, a sub magazine which takes out the tray from the tray magazine, a supply station which receives the taken-out tray, and an elevation mechanism which elevates the sub magazine and conveys the tray between the tray magazine and the supply station.

WO 2017/191257 relates to a transfer apparatus for coupling to a process apparatus, in particular to a stationary conveying station and/or to a processing station and/or to a further transfer apparatus, for the purpose of introducing and/or removing articles, in particular workpieces and/or workpiece carriers, wherein the transfer apparatus comprises a main framework and at least one conveying device, which is carried by the main framework and has force-transmission means and conveying means, driven by the force-transmission means, in order to be able to transfer articles to the said process apparatus and receive them therefrom, wherein the at least one conveying device can be changed in position in order for the transfer apparatus to be advanced reversibly up to the process apparatus.

JP2010 189094 provides a temporary storage device of a carrying article capable of reducing a space in an installation place, capable of reducing equipment cost, and capable of desirably enhancing safety. This temporary storage device has a storage part having vertically a plurality of shelves provided with a carrying means of an article, and a lifting means capable of lifting this storage part and positioning a selected predetermined shelf among the storage part in the same height as a carrying passage. By synchronizing carrying means of the carrying passage with the carrying means of the predetermined shelf, the article carried from the carrying passage is carried in upward onto the predetermined shelf, or the article on the predetermined shelf is carried out upward onto the carrying passage.

In store device according to DE 3837402 having a stationary magazine and a conveying unit which can be moved up and down in front of the compartments of the magazine, an introducing apparatus and an extracting apparatus is necessary in addition to conveyor belts in order to insert articles and to remove them from the magazine. This results in a relatively complicated construction and does not permit jolt-free placing in storage. In order to obtain a store device having a relatively simple design and having jolt-free placing in storage of the articles, an insertion apparatus for introducing the articles to be stored into the compartments of the magazine contains at least one coupling unit which is drive-connected to one of the conveyor belts. In every compartment of the magazine there is a conveying device for the article to be stored in each case, which conveying device can be coupled to the coupling unit. The store device is suitable above all for storing printed circuit boards equipped with SMD components.

DE 3837402 discloses a conveyance system according to the preamble of independent claim 1.

In the tray supply device, the sub magazine includes a plurality of belt conveyance units as a conveyance mechanism for conveying the tray. Each belt conveyance unit includes a conveyance motor, a drive pulley which is driven by the conveyance motor, a driven pulley which is rotatably supported, and an endless belt which is wound around the drive pulley and the driven pulley. In addition, the supply station includes a two-stage belt conveyance unit as a tray placement portion. In addition, a structure of the belt conveyance unit is the same as those of the sub magazine and the supply station.

In the tray supply device disclosed in Japanese Patent No. 5278122, both the sub magazine on a tray-sending side and the supply station on a tray-receiving side have the belt conveyance unit of the same structure. That is, the conveyance motor which drives the endless belt is provided in each of the sub magazine and the supply station, and when the tray is delivered between the sub magazine and the supply station, the conveyance motor is independently driven at each of the sub magazine and the supply station.

Japanese Patent No. 4120009 discloses a conveyance device which adopts a magnet coupling for transmitting a driving force between a rotating shaft and a driven shaft of a roller conveyor. In this conveyance device, one magnetization cylinder constituting the magnet coupling is fixed to each of a plurality of driven shafts aligned in a conveyance direction of the roller conveyor, and the other magnetization cylinder which corresponds to each magnetization cylinder on the driven shaft side and has the same number as that of the one magnetization cylinder is fixed to the rotating shaft extending in the same conveyance direction.

In the conveyance device of Japanese Patent No. 4120009, when the rotating shaft is rotated, the driving force is transmitted to each magnet coupling in a non-contact manner, the plurality of driven shafts is rotated together with rollers, and a conveyance target moves on the rollers.

Meanwhile, in a conveyance system in which a workpiece accommodated in a plurality of shelves is taken out so as to be conveyed, for example, as described in Japanese Patent No. 5278122, a drive motor for driving the endless belt of the belt conveyance unit is provided on the supply station side on which the tray is received in addition to the sub magazine side from which the tray is sent out. Accordingly, the number of motors increases, and thus, a control thereof is complicated. In addition, the number of parts including the motors and control units thereof increases, and thus, a manufacturing cost increases.

The present invention is made in consideration of the above-described circumstances, and in a conveyance system which carries-in or carries-out a workpiece between a plurality of shelves accommodating the workpiece and a conveyance device, an object of the present invention is to provide a conveyance system capable of decreasing the number of parts so as to reduce a manufacturing cost and stably and smoothly conveying the workpiece, and a method for conveying the workpiece using the conveyance system.

### SUMMARY OF THE INVENTION

According to an aspect of the present invention, a conveyance system includes:
a conveyance device which is capable of elevating in a vertical direction and thereby conveying a workpiece with its elevation; and
an accommodation device including a plurality of shelves disposed so as to stack each other in the vertical direction, wherein each of the shelves is capable of accommodating the workpiece, and which is configured to perform bringing-in of the workpiece from the conveyance device to the shelf and bringing-out of the workpiece from the shelf to the conveyance device.

The conveyance device includes a carrying mechanism which carries-out the workpiece from the accommodation device and carries-in the workpiece to the accommodation device, and an elevation mechanism which elevates the carrying mechanism in a vertical direction, wherein the carrying mechanism includes:
a base which is elevated by the elevation mechanism,
a first conveyance portion which is mounted on the base and conveys the workpiece between the first conveyance portion and the shelves,
a first drive motor which drives the first conveyance portion,
a second drive motor which is mounted on the base, and
a first magnetic member which is rotationally driven by the second drive motor,
wherein each shelf of the accommodation device includes:
a second base, and a delivery mechanism which delivers the workpiece between the delivery mechanism and the conveyance device,
wherein the delivery mechanism includes:
   a second conveyance portion which is mounted on the second base and performs bringing-in of the workpiece from the first conveyance portion and bringing-out of the workpiece to the first conveyance portion, and
   a second magnetic member to which a rotational driving force of the first magnetic member is capable of being transmitted in a non-contact manner, and which operates the second conveyance portion by the rotational driving force.

A method for conveying a workpiece using a conveyance system, wherein the system including: a conveyance device which is capable of elevating in a vertical direction and thereby conveying the workpiece with its elevation, and an accommodation device including a plurality of shelves disposed so as to stack each other in the vertical direction, each of the shelves is capable of accommodating the workpiece, and which performs bringing-in of the workpiece from the conveyance device to the shelf and bringing-out of the workpiece from the shelf to the conveyance device, wherein
the conveyance device includes: a carrying mechanism which carries-out the workpiece from the accommodation device and carries-in the workpiece to the accommodation device, and an elevation mechanism which elevates the carrying mechanism in a vertical direction,
wherein the carrying mechanism includes: a base which is elevated by the elevation mechanism, a first conveyance portion which is mounted on the base and conveys the workpiece between the first conveyance portion and the shelves, a first drive motor which drives the first conveyance portion, a second drive motor which is mounted on the base, a first magnetic member which is rotationally driven by the second drive motor, and an actuator which performs moving forward the first magnetic member to the accommodation device and moving backward the first magnetic member from the accommodation device,
wherein each shelf of the accommodation device includes: a second base, and a delivery mechanism which delivers the workpiece between the delivery mechanism and the conveyance device,
wherein the delivery mechanism includes: a second conveyance portion which is mounted on the second base and performs bringing-in of the workpiece from the first conveyance portion and bringing-out of the workpiece to the first conveyance portion, and a second magnetic member to which a rotational driving force of the first magnetic member is capable of being transmitted in a non-contact manner, and which operates the second conveyance portion by the rotational driving force, the method comprising:
   a first movement step of elevating the the carrying mechanism in the vertical direction by the elevation mechanism to position the carrying mechanism at the same height as that of an arbitrary selected shelf among the plurality of shelves;
   a second movement step of operating the actuator to cause the first magnetic member to approach the second magnetic member while maintaining a state where the conveyance device is positioned at the same height as that of the arbitrarily-selected shelf;
   a traveling step of operating the first drive motor to travel the first conveyance portion forward or backward; and
   a non-contact transmission drive step of operating the second drive motor to travel the second conveyance portion forward or backward via the first and second magnetic members while maintaining a state where the first magnetic member approaches the second magnetic member.

According to the present invention, the conveyance device is moved in the vertical direction by the elevation mechanism, and thereby the conveyance device is disposed at the same height as that of the arbitrarily selected shelf of the accommodation device among the plurality of shelves. In addition, at the same time that the first conveyance portion is operated by the first drive motor in the conveyance device, the first magnetic member is rotated by the second drive motor. At this time, the rotational driving force of the second drive motor is transmitted to a portion between the first magnetic member and the second magnetic member of the adjacent shelf in a non-contact manner, and the second conveyance portion of the adjacent shelf is operated. The first conveyance portion and the second conveyance portion are simultaneously operated, and thus, the carrying-in and the carrying-out of the workpiece are performed between the arbitrarily selected shelf of the accommodation device and the conveyance device. The second drive motor which operates the second conveyance portion is not provided on the accommodation device side and is provided on the conveyance device side, and thus, the rotational driving force of the second drive motor is transmitted from the first magnetic member of the conveyance device to the second magnetic member of the accommodation device in a non-contact manner. Accordingly, the drive motor for operating the second conveyance portion does not need to have the drive motor for operating the second conveyance portion in each shelf of the accommodation device, and it is possible to provide the conveyance system with a reduced manufacturing cost.

According to the present invention, each time the conveyance device is lifted or lowered and is disposed at the same height as that of the arbitrarily selected shelf of the accommodation device, a gap between the first magnetic member and the second magnetic member is controlled to be an appropriate distance which is determined in advance. Accordingly, even when the accommodation device having the plurality of shelves is not assembled with high dimensional accuracy, it is possible to stably operate a magnet coupling including the first magnetic member and the second magnetic member.

### BRIEF DESCRIPTION OF THE DRAWINGS

FIG. 1 is a view showing a first embodiment of the present invention and is a plan view of a conveyance device and an accommodation device constituting a conveyance system 1A.
FIG. 2 is a view showing a first embodiment of the present invention and a front view of the conveyance device and the accommodation device constituting the conveyance system 1A.
FIG. 3 is a schematic view schematically showing a structure of magnet coupling constituted by a combination of magnetic members 24 and 55.
FIG. 4 is a front view explaining carrying-out of a workpiece W from an accommodation device 50 in the conveyance device 10.
FIGS. 5A and 5B are views showing a change of a disposition of the magnetic members 24 and 55 constituting the magnet coupling, in a stepwise manner.
FIGS. 6A and 6B are views explaining a movement of an arm 66 constituting a stopper 65 in a stepwise manner.
FIG. 7 is a front view explaining carrying-out of the workpiece W from the accommodation device 50 in the conveyance device 10.
FIG. 8 is a front view explaining delivering of the workpiece W from the conveyance device 10 to a conveyor device 78 in the conveyance device 10.
FIG. 9 is a plan view showing Modification Example 1 of the first embodiment.
FIG. 10 is a plan view showing Modification Example 2 of the first embodiment.
FIG. 11 is a plan view showing Modification Example 3 of the first embodiment.
FIG. 12 is a view showing a second embodiment of the present invention and is a plan view of a conveyance device and an accommodation device constituting a conveyance system 1B.
FIG. 13 is a view showing a third embodiment of the present invention and is a plan view of a conveyance device and an accommodation device constituting a conveyance system 1C.
FIG. 14 is a plan view showing Modification Example 4 adopting a friction roller instead of the magnet coupling.

### DETAILED DESCRIPTION OF THE INVENTION

Hereinafter, a conveyance system and a method for conveying a workpiece according to the present invention will be described.

### (First Embodiment)

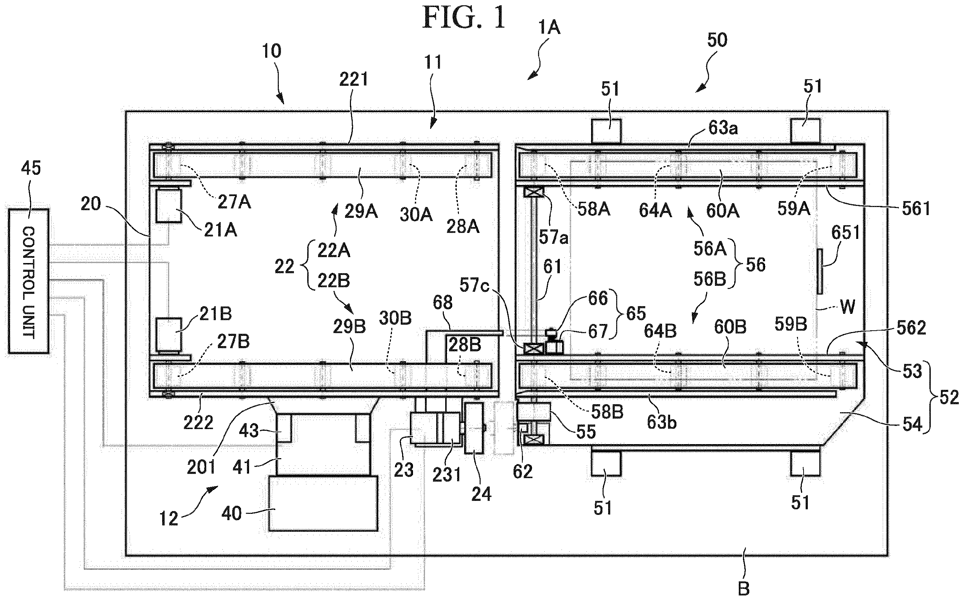

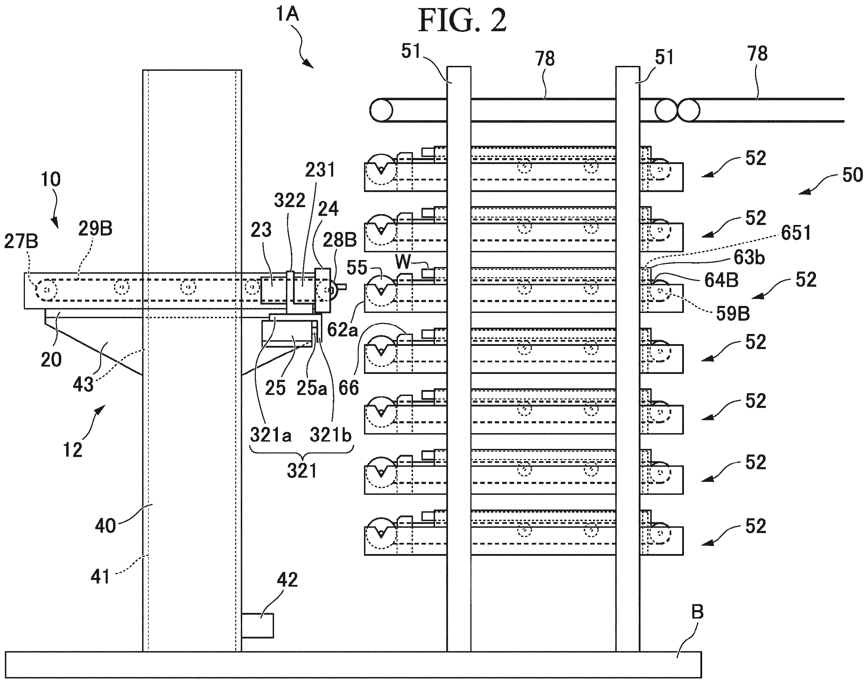

As shown in FIGS. 1 and 2, a conveyance system 1A of a first embodiment of the present invention includes a conveyance device 10 which conveys a workpiece (for example, a tray on which a processing target is placed) W and an accommodation device 50 which accommodates the workpiece W.

The conveyance device 10 includes a carrying mechanism 11 which carries-out the workpiece W from the accommodation device 50 and carries-in the workpiece W to the accommodation device 50 and an elevation mechanism 12 which elevates the carrying mechanism 11 in a vertical direction.

The carrying mechanism 11 includes a base 20, motors (first drive motors) 21A and 21B, a conveyance portion (first conveyance portion) 22, a motor (second drive motor) 23, a magnetic member (first magnetic member) 24, and a single-axis robot (actuator) 25. Each mechanism of the conveyance device 10 is mounted on the base 20. For example, an electric cylinder may be used as the single-axis robot 25, and the single-axis robot 25 is also mounted on the base 20.

The conveyance portion 22 is configured of a pair of belt conveyance mechanisms 22A and 22B which are disposed to be separated from each other to be parallel in a delivery direction of the workpiece W between the conveyance device 10 and the accommodation device 50.

One of the belt conveyance mechanisms 22A includes a drive wheel 27A, a driven wheel 28A which is disposed in a direction separated from the drive wheel 27A in the conveyance direction of the workpiece W, an endless belt 29A which is wound around the drive wheel 27A and the driven wheel 28A, and a plurality of auxiliary wheels 30A which are disposed between the drive wheel 27A and the driven wheel 28A to support the endless belt 29A. The drive wheel 27A, the driven wheel 28A, and the auxiliary wheels 30A are provided on a conveyance frame 221 and are rotatable about a horizontal axis orthogonal to the conveyance direction. In addition, a rotating shaft of the motor 21A is connected to the drive wheel 27A. The motor 21A is operated to drive the drive wheel 27A, and thus, the endless belt 29A travels in a direction moving forward or backward between the drive wheel 27A and the driven wheel 28A.

The other of the belt conveyance mechanisms 22B includes a drive wheel 27B, a driven wheel 28B which is disposed in a direction separated from the drive wheel 27B in the conveyance direction of the workpiece W, an endless belt 29B which is wound around the drive wheel 27B and the driven wheel 28B, and a plurality of auxiliary wheels 30B which are disposed between the drive wheel 27B and the driven wheel 28B to support the endless belt 29B. The drive wheel 27B, the driven wheel 28B, and the auxiliary wheels 30B are provided on a conveyance frame 222 and are rotatable about a horizontal axis orthogonal to the conveyance direction. In addition, a rotating shaft of the motor 21B is connected to the drive wheel 27B. The motor 21B is operated to drive the drive wheel 27B, and thus, the endless belt 29B travels in a direction moving forward or backward between the drive wheel 27B and the driven wheel 28B.

The single-axis robot 25 includes an extensible drive shaft 25a. An L-shaped pedestal 321 is fixed to a tip of the drive shaft 25a. An L-shaped long side portion 321a is disposed on the single-axis robot 25 and an L-shaped short side portion 321b of the pedestal 321 is connected to the tip of the drive shaft 25a. In addition, a bracket 322 which supports the motor 23 is fixed to the L-shaped long side portion 321a.

For example a stepping motor may be used as the motor 23. In addition, any motor such as a DC motor or an AC motor can be used. The drive shaft of the motor 23 is parallel to the conveyance direction of the belt conveyance mechanism 22B and is disposed at a position facing the accommodation device 50 in the vicinity of the belt conveyance mechanism 22B. A disk-shaped magnetic member 24 is fixed to the rotating shaft of the motor 23 via a coupling 231. Accordingly, the magnetic member 24 is rotated by driving the motor 23.

The drive shaft 25a of the single-axis robot 25 moves forward or backward in a direction parallel to the conveyance direction of the workpiece W. The pedestal 321, the bracket 322, and the motor 23 are moved forward or backward by the forward or backward movement of the drive shaft 25a. Therefore, the magnetic member 24 fixed to the tip of the rotating shaft of the motor 23 approaches the accommodation device 50 or is separated from the accommodation device 50.

The elevation mechanism (single-axis robot) 12 is fixed to a side surface of a column 40 standing on a substrate B. The elevation mechanism 12 includes a ball screw unit 41, a motor 42 which drives the ball screw unit 41, a control unit 45 (refer to FIG. 1) which controls the motor 42, and a slider 43 which is connected to a ball nut (not shown) of the ball screw unit 41 and can be elevated in the vertical direction. A portion 201 of the base 20 is fixed to the slider 43. In addition, in the elevation mechanism 12, the ball screw unit 41 is driven by driving the motor 42, the slider 43 is elevated, and as a result, the base 20 is also elevated.

The accommodation device 50 includes four columns 51 and a plurality of shelves 52 which are disposed inside the columns 51 and accommodate the workpiece W.

The plurality of shelves 52 are stacked each other in the vertical direction overlap each other so as to be disposed at equal intervals, and are supported by each of the four columns 51. Each shelf 52 includes a delivery mechanism 53 which delivers the workpiece W between the conveyance device 10 and the shelf 52 and a base 54.

The delivery mechanism 53 includes a magnetic member (second magnetic member) 55 and a conveyance portion (second conveyance portion) 56. The magnetic member 55 and the conveyance portion 56 are mounted on the base 54.

The conveyance portion 56 is configured of a pair of belt conveyance mechanisms 56A and 56B which are parallel to each other so as to be separated from each other in a direction intersecting a delivery direction of the workpiece W between the conveyance device 10 and the accommodation device 50, that is, the same direction as the belt conveyance mechanisms 22A and 22B of the conveyance device 10.

One of the belt conveyance mechanisms 56A includes a drive wheel 58A which is pivotally supported by a bearing 57a, a driven wheel 59A which is disposed in a direction separated from the drive wheel 58A in the conveyance direction of the workpiece W, an endless belt 60A which is wound around the drive wheel 58A and the driven wheel 59A, and a plurality of auxiliary wheels 64A which are disposed between the drive wheel 58A and the driven wheel 59A to support the endless belt 60A. The drive wheel 58A, the driven wheel 59A, and the auxiliary wheels 64A are provided outside (on an upper side in FIG. 1) a conveyance frame 561 and are rotatable about a horizontal axis orthogonal to the conveyance direction. In addition, the drive wheel 58A is connected to a drive shaft 61.

The other of the belt conveyance mechanisms 56B includes a drive wheel 58B which is pivotally supported by a bearing 57c, a driven wheel 59B which is disposed in a direction separated from the drive wheel 58B in the conveyance direction of the workpiece W, an endless belt 60B which is wound around the drive wheel 58B and the driven wheel 59B, and a plurality of auxiliary wheels 64B which are disposed between the drive wheel 58B and the driven wheel 59B to support the endless belt 60B. The drive wheel 58B, the driven wheel 59B, and the auxiliary wheels 64B are provided outside (on a lower side in FIG. 1) a conveyance frame 562 and are rotatable about a horizontal axis orthogonal to the conveyance direction. In addition, the drive wheel 58B is connected to the drive shaft 61.

The drive wheel 58A and the drive wheel 58B share the drive shaft 61. The drive wheel 58 B side of the drive shaft 61 extends outward from the other belt conveyance mechanism 56B in the direction intersecting the above-described delivery direction. The magnetic member 55 is provided on one end (an extension end) of the shared drive shaft 61. Like the magnetic member 24, the magnetic member 55 is a disk-shaped member, a center of the magnetic member 55 is fixed to the one end of the drive shaft 61. The magnetic member 55 is rotated in the circumferential direction, and thus, the drive wheel 58B and the driven wheel 59B are rotated in the same direction. That is, the magnetic member 55 is rotated, the endless belt 60A rolls between the drive wheel 58A and the driven wheel 59A, and the endless belt 60B rolls between the drive wheel 58B and the driven wheel 59B.

A guide plate 63a which guides the workpiece W is attached to an outer side (the upper side in FIG. 1) of the base 54 in a widthwise direction of the endless belt 60A so as to be along a traveling direction of the endless belt 60A. A guide plate 63b which guides the workpiece W is attached to an outer side (the lower side in FIG. 1) in a widthwise direction of the endless belt 60B so as to be along a traveling direction of the endless belt 60B.

Stoppers 65 and 651 which hold the workpiece W on the shelf 52 are provided between the endless belts 60A and 60B on the base 54 of each shelf 52. The stopper 65 is installed on one side of the base 54 close to the conveyance device 10 in a standing manner. Also, the stopper 651 is installed on the other side of the base 54 far from the conveyance device 10 with respect to the stopper 65 in a standing manner. The workpiece W is abutted onto the stopper 651, and thereby a movement of the workpiece W in a direction leaving from the conveyance device 10 is restricted. Also, the workpiece W is abutted onto the stopper 65, and thereby a movement of the workpiece W in a direction approaching the conveyance device 10 is restricted. In addition, the stopper 65 includes an arm 66 which is pivotally supported on the base 54 and a torsion coil spring 67 which biases the arm 66 in a direction in which the arm 66 uprightly stands perpendicularly to the base 54. An upper end portion of the arm 66 protrudes from a conveyance surface of each of the endless belts 60A and 60B in a state where the arm 66 stands uprightly, and thereby the upper end portion prevents the workpiece W from moving approach the conveyance device 10. Meanwhile, a push rod 68 is provided between the endless belts 29A and 29B on the base 20 of the conveyance device 10. The push rod 68 is abutted onto the arm 66 of the stopper 65 according to a forward movement of the magnetic member 24 caused by the single-axis robot 25, and tilts the arm 66 in the direction leaving from the conveyance device 10 against a biasing force of the torsion coil spring 67 by a further forward movement of the magnetic member 24. Accordingly, the movement restriction of the workpiece W approaching the conveyance device 10 is canceled, and thereby the workpiece W can be brought-out from the accommodation device 50 to the conveyance device 10 side. A base of the push rod 68 is fixed to the pedestal 32.

As shown in FIG. 2, a conveyor device 78 which conveys the workpiece W delivered from each shelf 52 to the conveyance device 10 to another step is provided on an upper portion of the accommodation device 50. The conveyor device 78 is installed at an upper portion of the column 51, and the workpiece W received by the conveyance device 10 is delivered from the conveyance device 10 to the conveyor device 78. Thereafter, the workpiece W is conveyed in the direction leaving from the conveyance device 10 by driving the conveyance device 78.

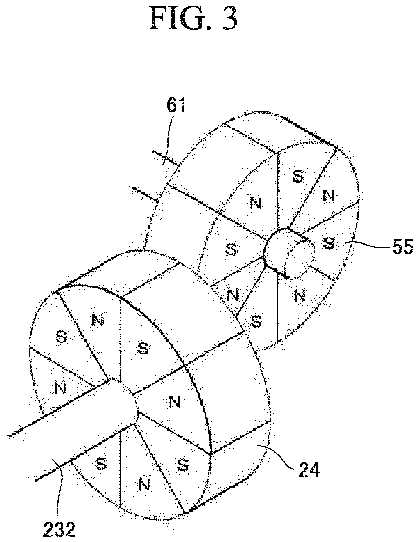

When the carrying mechanism 11 and the shelf 52 in the accommodation device 50 are positioned at the same height as each other, as shown in FIG. 3, an end surface of the magnetic member 24 facing the magnetic member 55 and a peripheral surface of the magnetic member 55 face each other. The rotating shaft 232 of the magnetic member 24 is orthogonal to the drive shaft 61 of the magnetic member 55. Here, the magnetic member 24 constitutes the magnetic member 55 and the magnet coupling. The magnetic coupling is a mechanism in which two disk-shaped magnetic members having N poles and S poles alternately disposed in a circumferential direction are disposed to be close to each other and a non-contact torque transmission can be performed by using a magnetic force acting between the two magnetic members. As a gap during operation between both the magnetic member 24 on the drive side and the magnetic member 55 on the driven side, an appropriate distance (D0) is predetermined depending on a magnetic force applied to the magnetic member 24 and the magnetic member 55. When the magnetic member 24 is rotated in one direction in a state where the magnetic member 24 and the magnetic member 55 are separated from each other by the appropriate distance (D0), the magnetic member 55 is also rotated in the one direction while being in non-contact with the magnetic member 55 by the magnetic force acting between the magnetic member 24 and the magnetic member 55. When the magnetic member 24 is rotated in a reverse direction, the magnetic member 55 is also rotated in the reverse direction. In the example of FIG. 3, when the magnetic member 24 is rotated in a right-handed forward direction (clockwise direction), the magnetic member 55 is rotated in a right-handed backward direction (clockwise direction) in FIG. 3. Meanwhile, when the magnetic member 24 is rotated in a left-handed backward direction (counterclockwise direction), the magnetic member 55 is rotated in a right-handed forward direction (counterclockwise direction) in FIG. 3.

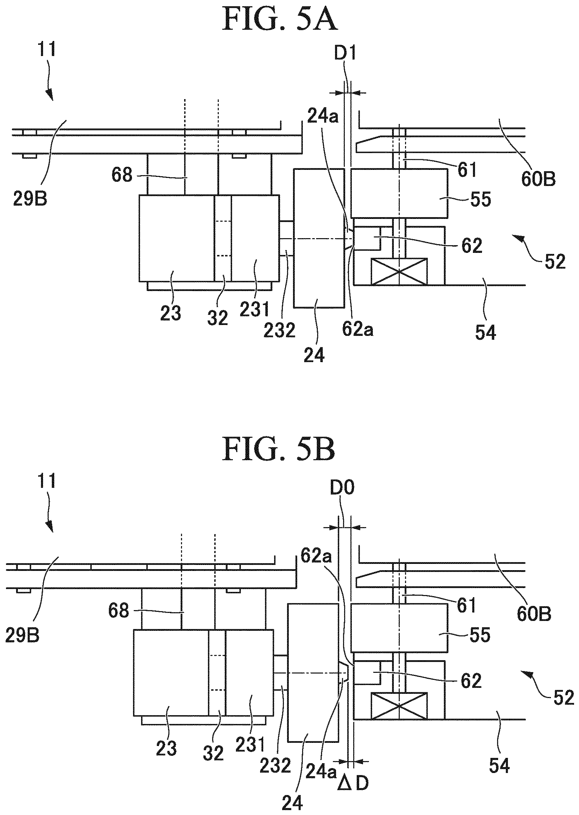

As shown in FIGS. 5A and 5B, a protrusion 24a which protrudes toward the accommodation device 50 side is provided at a center of one end surface of the magnetic member 24. Meanwhile, an abutment member 62 onto which the protrusion 24a is abutted is provided on the base 54 of each shelf 52 of the accommodation device 50. Each abutment member 62 includes a smooth side surface portion 62a on the carrying mechanism 11 side. When the magnetic member 24 is moved forward to the accommodation device 50, the protrusion 24a is abutted onto the smooth side surface portion 62a. All the shelves 52 are adjusted such that positional relationships between the magnetic members 55 and the side surface portions 62a of the abutment member 62 are the same as each other.

The conveyance device 10 includes a control unit 45 which controls the operations of the motors 21A, 21B, and 23 the single-axis robot 25 of the carrying mechanism 11 and the motor 42 of the elevation mechanism 12.

The control unit 45 operates the motors 21A and 21B synchronously to selectively rotate the drive wheels 27A and 27B in two forward and backward directions at the same rotational speed. Accordingly, the endless belt 29A and the endless belt 29B are always synchronized and travel at a constant speed in the same direction.

The control unit 45 operates the single-axis robot 25 so as to move the magnetic member 24 forward or backward toward the accommodation device 50 and controls a forward movement amount and a backward movement amount of the magnetic member 24 caused by the single-axis robot 25.

In addition, the control unit 45 operates the motor 23 so as to selectively rotate the magnetic member 24 in the two forward and backward directions at a constant speed. When the magnetic member 24 is rotated, the magnetic member 55 is selectively rotated in the two forward and backward directions at a constant speed according to a rotation direction of the magnetic member 24, the drive wheels 58A and 58B are selectively rotated in the two forward and backward directions at the same rotation speed via the drive shaft 61 connected to the magnetic member 55. Accordingly, the endless belt 60A and the endless belt 60B are always synchronized and travel in the same direction.

In addition, the control unit 45 operates the motor 42 of the elevation mechanism 12 and elevates the carrying mechanism 11 for each base 20 in the vertical direction.

Continuously, a delivering operation of the workpiece W performed between the conveyance device 10 and the accommodation device 50 will be described.

As shown in FIG. 2, one workpiece W is placed on each shelf 52 of the accommodation device 50. Meanwhile, the workpiece W is not placed on the conveyance device 10. A case where the workpiece W placed on the shelf 52 of a second stage from a bottom of the accommodation device 50 is brought-out to the conveyance device 10 will be described.

### (First Movement Step)

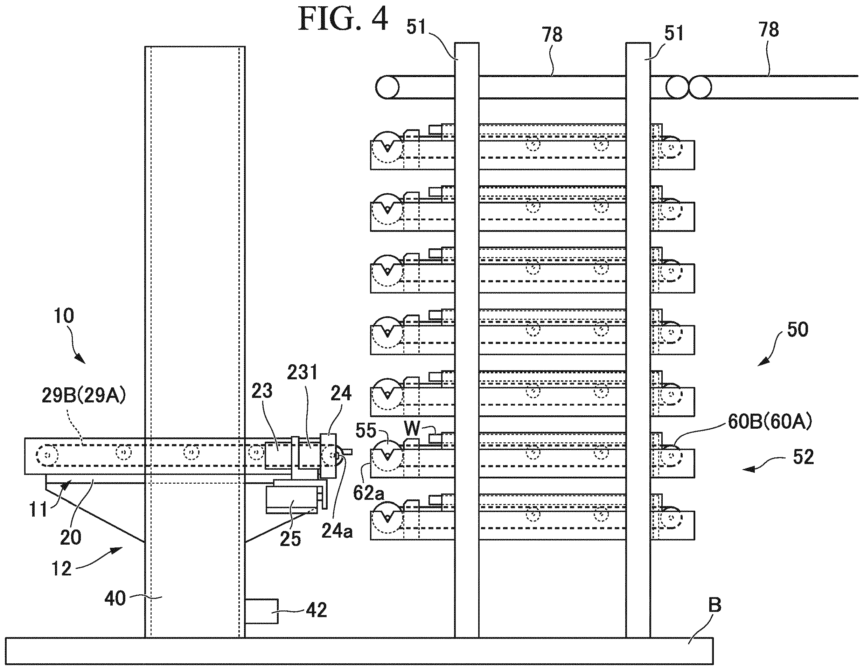

In the state of FIG. 2, first, the control unit 45 operates the elevation mechanism 12 of the conveyance device 10 so as to elevate the carrying mechanism 11 for each base 20. In addition, as shown in FIG. 4, the control unit 45 controls the elevation of the carrying mechanism 11 such that the carrying mechanism 11 and the shelf 52 (here, the second stage from the bottom) in which the workpiece W to be brought-out is accommodated are positioned at the same height.

### (Second Movement Step)

Next, as shown in FIG. 5A, the control unit 45 operates the single-axis robot 25 so as to move the magmatic member 24 forward to the accommodation device 50. Thereafter, when the magnetic member 24 approaches the shelf 52 of the second stage from the bottom, the protrusion 24a provided at the center of the magnetic member 24 is abutted onto the side surface portion 62a of the abutment member 62 of the shelf 52. At this time, the control unit 45 determines that the magnetic member 24 is positioned at a relative position of a distance D1 from the magnetic member 55, stops the forward movement of the single-axis robot 25, and holds the magnetic member 24 at the position. Here, the distance D1 at the time of the closest approaching between the magnetic members 24 and 55 is shorter a predetermined distance DO during operation between the magnetic members 24 and 55.

After the forward movement of the single-axis robot 25 stops, as shown in FIG. 5B, the control unit 45 moves the single-axis robot 25 backward by a difference ΔD between the distances DO and D1. Since the difference ΔD is predetermined, a size of a gap between the magnetic members 24 and 55 is controlled to the predetermined distance DO at the time of the operation by the backward movement control of the single-axis robot 25.

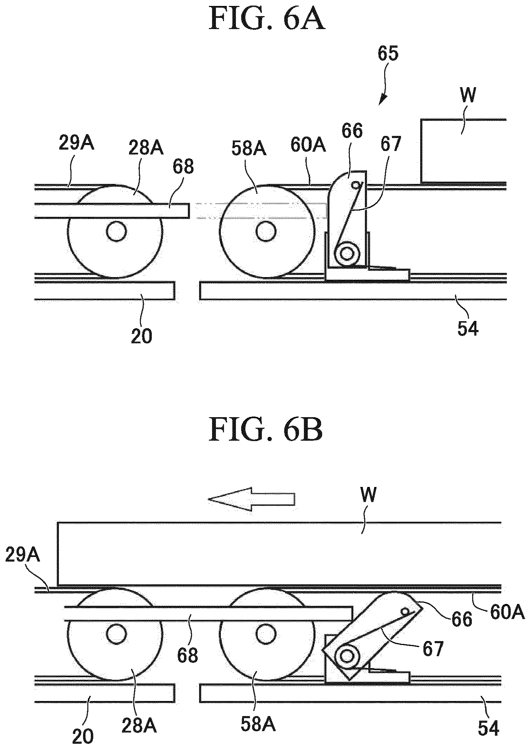

Also, at this time, when the magnetic member 24 is moved forward to the accommodation device 50, as shown in FIG. 6A, the push rod 68 whose base is fixed to the pedestal 32 also moves forward, and the tip of the push rod 68 is abutted onto the arm 66 of the stopper 65. When the push rod 68 further moves forward against the biasing force of the torsion coil spring 67, as shown in FIG. 6B, the arm 66 is pressed by the push rod 68 and is tilted. Accordingly, the upper end portion of the arm 66 is retracted below the conveyance surfaces of the endless belts 60A and 60B. Therefore, the movement restriction of the workpiece W toward the conveyance device 10 side is canceled, and the workpiece W from the shelf 52 of the second stage from the bottom can be delivered to the conveyance device 10 side.

### (Traveling Step and Non-contact Transmission Drive Step)

Next, the control unit 45 operates the motor 23 of the carrying mechanism 11, rotates the magnetic member 24 in one direction, and operates the motors 21A and 21B which drive the drive wheel 27A and 27B around which the endless belts 29A and 29B are wound. When the motor 23 is operated so as to rotate the magnetic member 24 in the one direction (forward direction), the magnetic member 55 of the shelf 52 is rotated in the one direction, and the drive wheels 58A and 58B are rotated in the one direction via the drive shaft 61 connected to the magnetic member 55. Accordingly, as shown in FIG. 6B, the endless belts 60A and the endless belt 60B travel forward to the conveyance device 10 side, and the workpiece W is sent out from the conveyance portion 56 of the shelf 52 of the second stage from the bottom of the accommodation device 50.

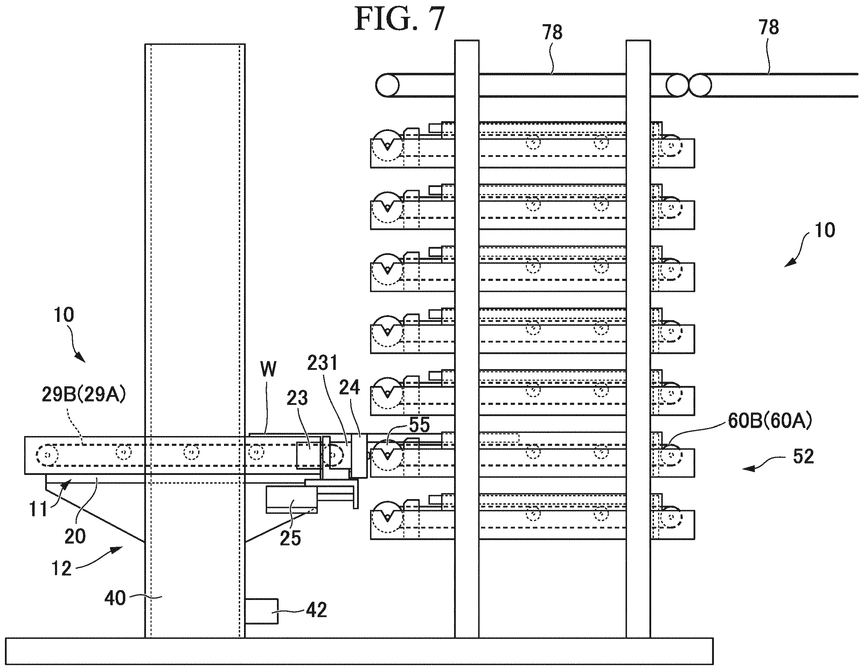

Meanwhile, the drive wheels 27A and 27B are rotated by operating the motors 21A and 21B which drive the drive wheels 27A and 27B around which the endless belts 29A and 29B are wound. At this time, the rotation speeds and the rotation directions of the motors 21A, 21B, and 23 are controlled to be adjusted in advance such that the rotational speeds and the rotation speeds of the drive wheels 27A and 27B and the drive wheels 58A and 58B are the same as each other. Accordingly, the endless belt 29A and the endless belt 29B of the carrying mechanism 11 and the endless belt 60A and the endless belt 60B of the shelf 52 travel forward at a constant speed in the same direction. As a result, as shown in FIG. 7, the workpiece W sent out from the conveyance portion 56 of the shelf 52 of the second stage from the bottom of the accommodation device 50 is delivered to the conveyance portion 22 of the conveyance device 10.

After the workpiece W is delivered to the conveyance portion 22 of the conveyance device 10, the control unit 45 stops the operations of the motors 21A, 21B, and 23, and thus, the rotations of the drive wheels 27A and 27B and the magnetic member 24 are stopped. In addition, the single-axis robot 25 is operated, the magnetic member 24 is moved backward from the accommodation device 50, and thus, as shown in FIG. 1, the magnetic member 24 is moved to a predetermined initial position.

Here, it is not necessary to start the driving of the motors 21A, 21B, and 23 at the same timing for all the motors, and the driving of the motors may be started individually. For example, first, the driving of only the motor 23 starts. In addition, in a stage in which a tip portion of the workpiece W is brought-out from the shelf 52 to some extent, the driving of the motors 21A and 21B may start such that the workpiece W is transferred from the shelf 52 to the conveyance portion 22. In addition, the driving of the motors 21A and 21B may start after the arm 66 of the stopper 65 is tilted.

In addition, it is not necessary to stop the driving of the motors 21A, 21B, and 23 at the same timing for all the motors, and the driving of the motors may be stopped individually. For example, in a stage in which the workpiece W is transferred from the shelf 52 to the conveyance portion 22 to some extent, first, the driving of only the motor 23 is stopped. Thereafter, in a state in which the workpiece W is completely transferred to the conveyance portion 22, the driving of the motors 21A and 21B may be stopped.

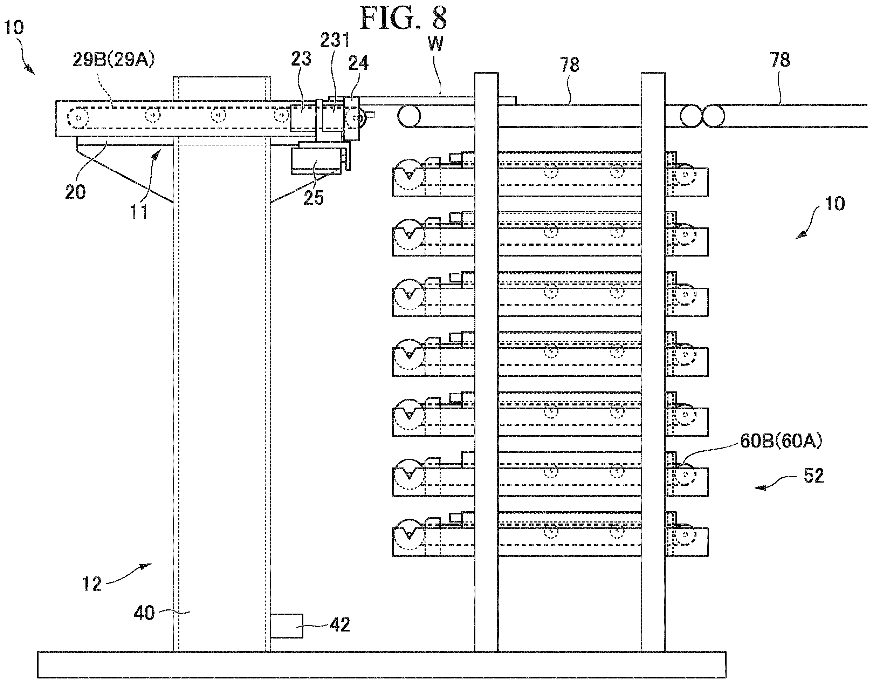

Thereafter, as shown in FIG. 8, the control unit 45 operates the motor 42 of the elevation mechanism 12 of the conveyance device 10 and elevates upward the carrying mechanism 11 on which the workpiece W is placed for each base 20, and thus, the carrying mechanism 11 is positioned at the same position as that of the conveyor device 78. Next, the motors 21A and 21B are operated. At this time, the motors 21A and 21B rotate in a direction opposite to the direction when the workpiece W is brought-out from the conveyance portion 56 of the shelf 52 to the conveyance portion 22 of the conveyance device 10. Accordingly, the endless belt 29A and the endless belt 29B travel forward to the conveyance device 78 side, and thus, the workpiece W is sent out from the conveyance portion 22 of the conveyance device 10. The conveyance device 78 is operated synchronously with the carrying mechanism 11, the workpiece W sent out from the conveyance device 10 is delivered to the conveyor device 78 and is sent to the next conveyance device, processing device, receiving device, or the like.

Meanwhile, in a case where the workpiece W placed on the carrying mechanism 11 is brought-in to any shelf 52 of the accommodation device 50, first, the control unit 45 operates the elevation mechanism 12 of the conveyance device 10. Accordingly, the carrying mechanism 11 is elevated, and the carrying mechanism 11 and an arbitrarily selected shelf 52 to which the workpiece W is to be brought-in are positioned at the same height. Thereafter, the motors and the like are operated in a way opposite of the bringing-out operation of the workpiece W from the shelf 52 to the carrying mechanism 11, and the workpiece W is brought-in from the carrying mechanism 11 to the arbitrary shelf 52.

In the present embodiment, the non-contact transmission between the magnetic member 24 and the magnetic member 55 is performed by a rotational driving force of the motor 23 provided in the carrying mechanism 11, and thus, the conveyance portion 56 of the accommodation device 50 is operated. The conveyance portion 56 cooperates with the conveyance portion 22 of the conveyance device 10, and thus, the bringing-in and the bringing-out of the workpiece W between the shelf 52 of the accommodation device 50 and the conveyance portion 22 of the conveyance device 10 are performed. The rotational driving force of the motor 23 of the conveyance device 10 is transmitted to between the magnetic member 24 of the conveyance portion 22 in the conveyance device 10 and the magnetic member 55 of any shelf 52 in the accommodation device 50 in a non-contact manner, and thus, the conveyance portion 56 of the accommodation device 50 is operated. Accordingly, since it is not necessary to provide the motor for operating the conveyance portion 56 in each shelf 52 of the accommodation device 50, the number of motors can be greatly reduced, and a manufacturing cost of the conveyance system can be suppressed.

In addition, in order to stably perform the non-contact transmission between the magnetic member 24 on the drive side and the magnetic member 55 on the driven side, that is, in order to stably operate the magnetic coupling, the gap (clearance) between the magnetic members 24 and 55 is required to be an appropriate distance (D0) according to the magnetic force applied to the magnetic members 24 and 55. However, when the conveyance device 10 is elevated and is positioned at the same height as each shelf 52 of the accommodation device 50, the gap between the magnetic member 24 and the magnetic member 55 is not always the appropriate distance (D0). If each shelf 52 of the accommodation device 50 is manufactured to be assembled to the column 51 with high dimensional accuracy, the gap between the magnetic member 24 and the magnetic member 55 can be maintained to an appropriate distance. However, in order to manage the appropriate distance (D0), high dimensional accuracy of 0.1 mm unit is required. As a result, a manufacturing cost of the accommodation device 50 and further a manufacturing cost of the entire conveyance system increase.

In the present embodiment, each time the conveyance device 10 is elevated and is positioned at the same position as the arbitrarily selected shelf 52 of the accommodation device 50, the gap between the magnetic member 24 and the magnetic member 55 is controlled to be the appropriate distance (D0) which is determined in advance. Accordingly, even in the accommodation device 50 which is assembled with low dimensional accuracy, it is possible to stably operate the magnet coupling including the magnetic member 24 and the magnetic member 55. Therefore, the rotational driving force can be stably transmitted to between the magnetic member 24 and the magnetic member 55 in a non-contact manner.

However, in the present embodiment, as shown in FIG. 5A and 5B, for example, the case where the magnetic member 24 and the magnetic member 55 is disposed such that the rotating shafts are orthogonal to each other is described. Here, in a case where a similar magnet coupling is configured, the disposition between the magnetic member 24 and the magnetic member 55 is not limited to FIGS. 5A and 5B. For example, dispositions such as the following modification examples may be adopted.

### (Modification Example 1)

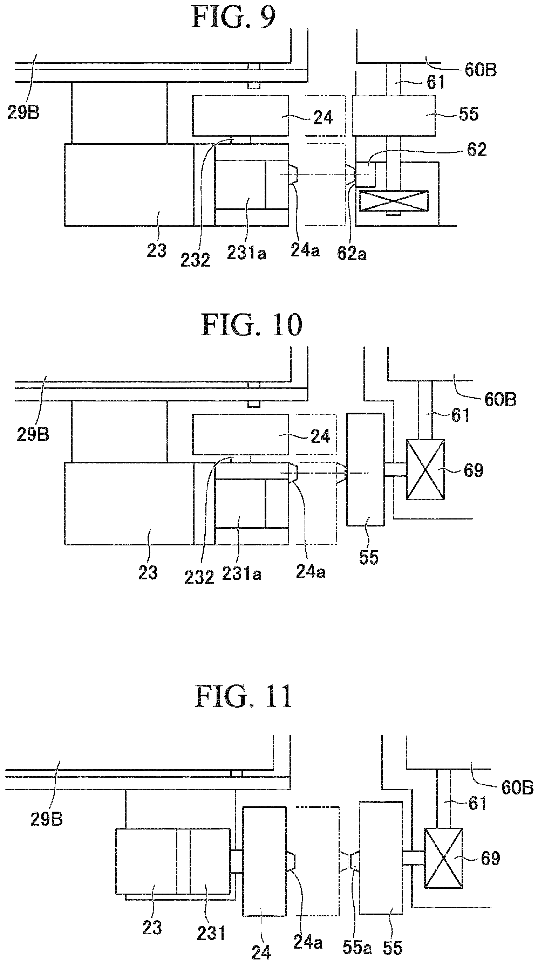

As shown in FIG. 9, a disposition of the motor 23 on the pedestal 32 is changed, and a direction of the rotating shaft 232 of the magnetic member 24 may be parallel to the direction of the drive shaft 61 of the magnetic member 55 via a gear box 231a such as a bevel gear between the magnetic member 24 and the rotating shaft of the motor 23. In this case, the protrusion 24a is not provided on the magnetic member 24 and is provided on a tip of the pedestal 32 on the single-axis robot 25 side.

In the present modification example, the control unit 45 operates the single-axis robot 25 so as to move the magnetic member 24 forward to the accommodation device 50. When the magnetic member 24 approaches an arbitrarily selected shelf 52 of the accommodation device 50 and the protrusion 24a provided on the pedestal 32 is abutted onto the abutment member 62 of the shelf 52, the control unit 45 stops the forward movement of the single-axis robot 25. Thereafter, the control unit 45 slightly moves the single-axis robot 25 so as to match the size of the gap between the magnetic members 24 and 55 to a predetermined distance at the time of operation. Thereafter, the step is transferred to the traveling step and the non-contact transmission drive step of the first embodiment, and the bringing-in of the workpiece W is performed.

### (Modification Example 2)

As shown in FIG. 10, the disposition of the motor 23 on the pedestal 32 is changed, the direction of the rotating shaft 232 of the magnetic member 24 may be parallel to the direction of the drive shaft 61 of the magnetic member 55 via the gear box 231a between the magnetic member 24 and the rotating shaft of the motor 23, and the direction of the rotating shaft of the magnetic member 55 may be orthogonal to the drive shaft 61 via a gear box 69 such as a bevel gear which transmits the driving force generated by the rotation of the magnetic member 55 to the drive shaft 61 between the magnetic member 55 and one end of the drive shaft 61. That is, one side surface of the magnetic member 24 may be disposed to face the peripheral surface of the magnetic member 55. Even in this case, the protrusion 24a is not provided on the magnetic member 24 and is provided on the tip of the pedestal 32 on the single-axis robot 25 side.

In the present modification example, the control unit 45 operates the single-axis robot 25 so as to move the magnetic member 24 toward the accommodation device 50. When the magnetic member 24 approaches an arbitrarily selected shelf 52 of the accommodation device 50 and the protrusion 24a provided on the pedestal 32 is abutted onto the center of the magnetic member 55, the control unit 45 stops the forward movement of the single-axis robot 25. Thereafter, the control unit 45 slightly moves the single-axis robot 25 backward so as to match the size of the gap between the magnetic members 24 and 55 to the predetermined distance at the time of operation. Thereafter, the step is transferred to the traveling step and the non-contact transmission drive step of the first embodiment, and the bringing-in of the workpiece W is performed.

### (Modification Example 3)

As shown in FIG. 11, the direction of the rotating shaft 232 of the magnetic member 55 may be orthogonal to the drive shaft 61 via the gear box 69 between the magnetic member 55 and one end of the drive shaft 61. That is, the direction of the rotating shaft 232 of the magnetic member 55 may coincide with the direction of the rotating shaft of the magnetic member 24, and the magnetic member 24 may be disposed so as to face the magnetic member 55. In addition, a protrusion (second abutment portion) 55a onto which the protrusion (first abutment portion) 24a of the magnetic member 24 is abutted is provided at a center of an end surface of the magnetic member 55 facing the magnetic member 24.

In the present modification example, the control unit 45 controls the single-axis robot 25 to move the magnetic member 24 forward to the accommodation device 50. When the magnetic member 24 approaches an arbitrarily selected shelf 52 of the accommodation device 50 and the protrusion 24a of the magnetic member 24 is abutted onto the protrusion 55a of the magnetic member 55, the control unit 45 stops the forward movement of the single-axis robot 25. Thereafter, the control unit 45 operates the single-axis robot 25 so as to move the pedestal 32 by a predetermined distance, and thus, the size of the gap between the magnetic members 24 and 55 is matched to the predetermined distance at the time of operation. Thereafter, the step is transferred to the traveling step and the non-contact transmission drive step of the first embodiment, and the bringing-in of the workpiece W is performed.

Also in the modification examples 1, 2, and 3, similarly to the first embodiment, it is possible to stably operate the magnet coupling including the magnetic members 24 and 55.

In addition, in the above-described modification example 1, when the protrusion 24a is abutted onto the abutment member 62 of the shelf 52, the forward movement of the single-axis robot 25 is stopped, and thereafter, the single-axis robot 25 is operated to be moved backward, the pedestal 32 is moved backward by a predetermined distance, and the size of the gap between the magnetic members 24 and 55 is matched to the predetermined distance at the time of operation. Meanwhile, the protrusion 24a may be used as a stopper which predetermines the distance between the conveyance device 10 and each shelf 52 of the accommodation device 50 to a predetermined length, that is, the distance at the time of operation. In this case, when the protrusion 24a is abutted onto the abutment member 62 of the shelf 52, the control unit 45 determines that the size of the gap between the magnetic members 24 and 55 coincides with the predetermined distance at the time of operation, and thereafter, the step is transferred to the traveling step and the non-contact transmission drive step of the first embodiment, and the bringing-in of the workpiece W is performed.

### (Second Embodiment)

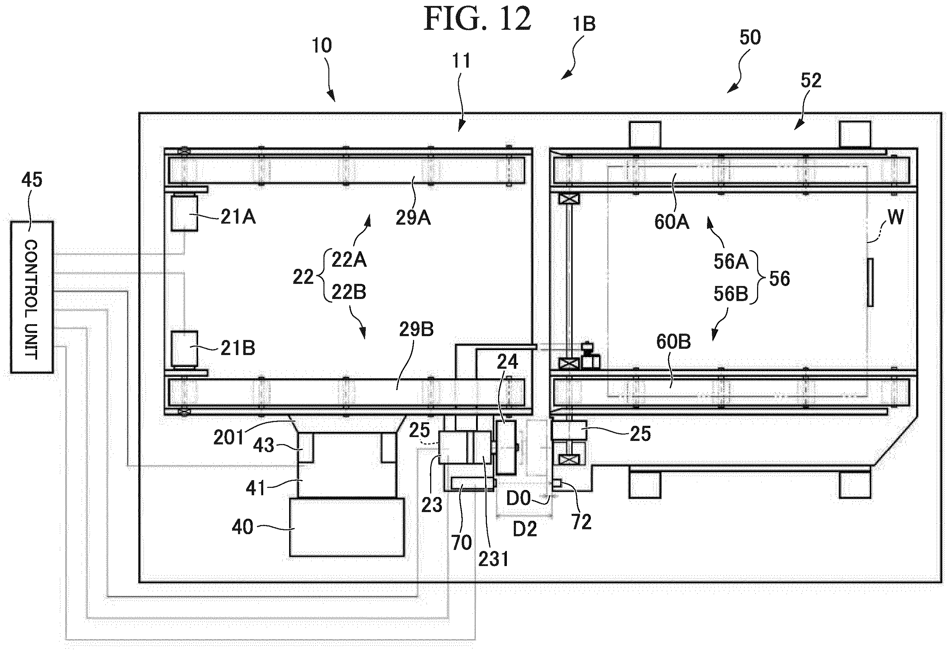

As shown in FIG. 12, a conveyance system 1B of a second embodiment of the present invention includes a distance measurement sensor 70 which measures a distance between the conveyance device 10 and each shelf 52 of the accommodation device 50. For example, as the distance measurement sensor 70, an infrared sensor, a laser displacement sensor (reflection type or transmission type sensor) is adopted. The distance measurement sensor 70 is fixed to the pedestal 32 to be adjacent to the motor 23. Meanwhile, a mirror surface portion 72 which reflects light rays emitted from the distance measurement sensor 70 is provided in each shelf 52 of the accommodation device 50. The distance measurement sensor 70 reflects the light rays emitted from the distance measurement sensor 70 to the mirror surface portion 72, and measures the distance between the distance measurement sensor 70 and the mirror surface portion 72. The control unit 45 feedforward-controls the forward movement amount of the magnetic member 24 caused by the single-axis robot 25, based on a measurement result of the distance measurement sensor 70.

In the present embodiment, a distance D2 between the distance measurement sensor 70 and the mirror surface portion 72 when the gap between the magnetic members 24 and 55 reaches the predetermined distance D0 at the time of operation is obtained in advance. The control unit 45 operates the single-axis robot 25 to move the pedestal 32, on which the magnetic member 24 and the distance measurement sensor 70 are mounted, forward to the accommodation device 50. When the magnetic member 24 approaches the shelf 52 of the second stage from the bottom and the gap between the distance measurement sensor 70 and the mirror surface portion 72 reaches the predetermined distance D2, the control unit 45 determines that the magnetic member 24 approaches the magnetic member 55 to the predetermined distance D0 at the time of operation.

In addition, the forward movement of the single-axis robot 25 is stopped and the position of the magnetic member 24 with respect to the magnetic member 55 is held at the distance D0 at the time of operation. Thereafter, the step is transferred to the traveling step and the non-contact transmission drive step of the first embodiment, and the bringing-in and the bringing-out of the workpiece W are performed.

In the present embodiment, the gap between the magnetic member 24 and the magnetic member 55 is matched to the appropriate distance D0 based on the measurement result of the distance measurement sensor 70, and thus, even in the accommodation device 50 having low dimensional accuracy, it is possible to stably operate the magnet coupling including the magnetic member 24 and the magnetic member 55. In addition, it is possible to shorten the operation time (cycle time) to an extent that does not move the single-axis robot 25 backward, and thus, operation efficiency of the conveyance system 1B is improved.

In the present embodiment, the distance measurement sensor 70 is provided on the conveyance device 10 side and the mirror surface portion 72 is provided on the accommodation device 50 side. However, the distance measurement sensor 70 may be provided on the accommodation device 50 side and the mirror surface portion 72 may be provided on the conveyance device 10 side.

### (Third Embodiment)

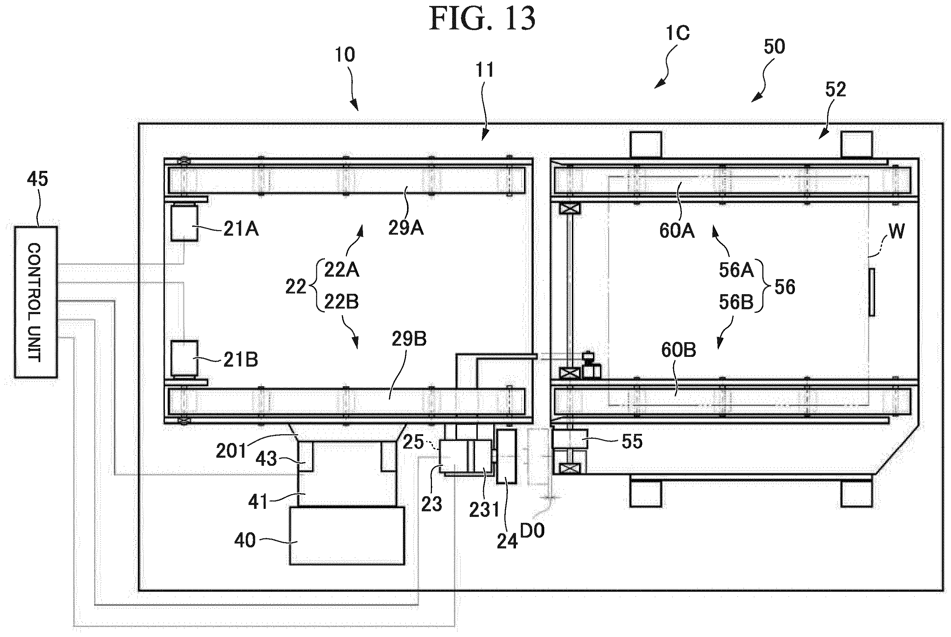

As shown in FIG. 13, a conveyance system 1C of a third embodiment of the present invention does not include means for measuring the distance between the conveyance device 10 and each shelf 52 of the accommodation device 50. In the present embodiment, the distance D0 at the time of operation in which the gap between the magnetic members 24 and 55 is predetermined is a known value and is obtained in advance. Here, when the protrusion 24a of the magnetic member 24 is abutted onto the side surface portion 62a of the abutment member 62 of the shelf 52, a protrusion amount of the protrusion 24a and/or a position of the side surface portion 62a is adjusted such that the gap between the magnetic members 24 and 55 is the distance DO at the time of operation. Accordingly, by only moving the single-axis robot 25 forward using the control unit 45 and causing the protrusion 24a of the magnetic member 24 to abut onto the side surface portion 62a of the abutment member 62, the gap between the magnetic members 24 and 55 can be positioned at the distance D0 at the time of operation. At this time, the control unit 45 determines that the magnetic member 24 approaches the magnetic member 55 to the predetermined distance D0 at the time of operation. In addition, the forward movement of the single-axis robot 25 is stopped and the position of the magnetic member 24 with respect to the magnetic member 55 is held at the distance D0 at the time of operation. Thereafter, the step is transferred to the traveling step and the non-contact transmission drive step of the first embodiment, and the bringing-in and the bringing-out of the workpiece W are performed.

Compared to the case where the distance measurement sensor 70 is adopted, a management of the gap between the magnetic members is inferior. However, the number of parts decreases, and a manufacturing cost of the conveyance system can be suppressed at a low cost. In addition, it is possible to shorten the operation time to an extent that does not move the single-axis robot 25 backward, and thus, operation efficiency of the conveyance system 1C is improved.

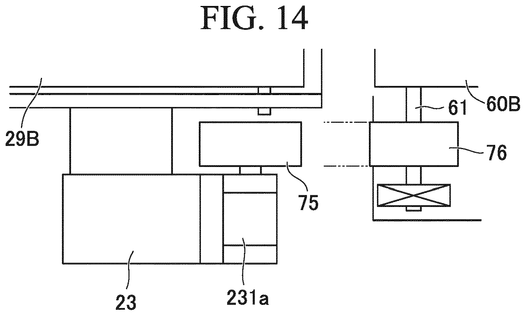

(Example 4, not part of the invention) In addition to the above-described embodiments, the following configuration is described. As shown in FIG. 14, contact type friction rollers may be combined with each other to transmit the rotational driving force of the motor 23 to the conveyance portion 56 without adopting the non-contact type magnetic coupling between the magnetic members.

In the present modification example, while a friction roller 75 is attached to the rotating shaft of the motor 23 instead of the magnetic member, a friction roller 76 is attached to one end of the drive shaft 61. The control unit 45 operates the single-axis robot 25 to move the friction roller 75 forward to the accommodation device 50. When a peripheral surface of the friction roller 75 comes into contact with a peripheral surface of the friction roller 76, the forward movement of the single-axis robot 25 is stopped by the controller 45. Thereafter, the step is transferred to the traveling step and the non-contact transmission drive step of the first embodiment, and the bringing-in and the bringing-out of the workpiece W are performed.

In the present modification example, the contact-type friction roller is adopted without adopting the magnet coupling in which the management of the gap between the magnetic members is difficult, and thus, a manufacturing cost of the conveyance system can be suppressed at a low cost. In addition, it is possible to shorten the operation time to an extent that does not move the single-axis robot 25 backward, and thus, operation efficiency of the conveyance system is improved.

The present invention relates to a conveyance system which conveys a workpiece accommodated in a plurality of shelves and a method for conveying the workpiece using the conveyance system.

According to the present invention, in the conveyance system, it is possible to decrease the number of parts, to suppress the manufacturing cost at a low cost, and to smoothly convey the workpiece.

While preferred embodiments of the invention have been described and illustrated above, it should be understood that these are exemplary of the invention and are not to be considered as limiting. Additions, omissions, substitutions, and other modifications can be made without departing from the scope of the present invention as defined in the appended claims.

Accordingly, the invention is not to be considered as being limited by the foregoing description, and is only limited by the scope of the appended claims.

## Claims

1. A conveyance system (1A), comprising:
a conveyance device (10) which is capable of elevating in a vertical direction and thereby conveying a workpiece (W) with its elevation; and
an accommodation device (50) including a plurality of shelves (52) disposed so as to stack each other in the vertical direction, each of the shelves (52) is capable of accommodating the workpiece (W), and which is configured to perform bringing-in of the workpiece (W) from the conveyance device (10) to the shelf and bringing-out of the workpiece (W) from the shelf to the conveyance device (10), wherein
the conveyance device (10) includes:
a carrying mechanism (11) which carries-out the workpiece (W) from the accommodation device (50) and carries-in the workpiece (W) to the accommodation device (50), and an elevation mechanism (12) which elevates the carrying mechanism (11) in a vertical direction,
wherein the carrying mechanism (11) includes:
a base (20) which is elevated by the elevation mechanism (12),
a first conveyance portion (22) which is mounted on the base (20) and conveys the workpiece (W) between the first conveyance portion (22) and the shelves (52),
a first drive motor (21A, 21B) which drives the first conveyance portion (22),
wherein each shelf (52) of the accommodation device (50) includes:
a second base (54), and a delivery mechanism (53) which delivers the workpiece (W) between the delivery mechanism (53) and the conveyance device (10),
wherein the delivery mechanism (53) includes:
a second conveyance portion (56) which is mounted on the second base (54) and performs bringing-in of the workpiece (W) from the first conveyance portion (22) and bringing-out of the workpiece (W) to the first conveyance portion (22), and **characterized in that** the conveyance device further includes:
a second drive motor (23) which is mounted on the base (20), and
a first magnetic member (24) which is rotationally driven by the second drive motor (23), and **in that** each shelf (52) of the accommodation device (50) includes:
a second magnetic member (55) to which a rotational driving force of the first magnetic member (24) is capable of being transmitted in a non-contact manner, and which operates the second conveyance portion (56) by the rotational driving force.

2. The conveyance system (1A) according to Claim 1,
wherein the conveyance device (10) further includes an actuator (25) which performs moving forward the first magnetic member (24) to the accommodation device (50) and moving backward the first magnetic member (24) from the accommodation device (50), and
wherein the conveyance system (1A) further comprises a control unit (45) which is configured to control a forward movement amount and a backward movement amount of the first magnetic member (24) caused by the actuator (25).

3. The conveyance system (1A) according to Claim 2,
wherein the accommodation device (50) includes an abutment portion (62) onto which the first magnetic member (24) is abutted.

4. The conveyance system (1A) according to Claim 3,
wherein the control unit (45) is configured to control the forward movement amount and the backward movement amount of the first magnetic member (24) caused by the actuator (25), according to a state where the first magnetic member (24) is abutted onto the accommodation device (50) via the abutment portion (62).

5. The conveyance system (1A) according to Claim 2,
wherein the accommodation device (50) includes an abutment portion onto which the actuator (25) is abutted.

6. The conveyance system (1A) according to Claim 5,
wherein the control unit controls the forward movement amount and the backward movement amount of the first magnetic member (24) caused by the actuator (25), according to a state where the actuator (25) is abutted onto the accommodation device (50) via the abutment portion.

7. The conveyance system (1A) according to Claim 2,
wherein the first magnetic member (24) includes a first abutment portion (24a) onto which the accommodation device (50) is abutted, and
wherein the accommodation device (50) includes a second abutment portion (62a) onto which the first abutment portion (24a) is abutted.

8. The conveyance system (1A) according to Claim 7,
wherein the control unit (45) controls the forward movement amount and the backward movement amount of the first magnetic member (24) caused by the actuator (25), according to a state where the first magnetic member (24) is abutted onto the accommodation device (50) via the first and second abutment portions (24a, 62a).

9. The conveyance system (1A) according to Claim 2, further comprising:
a distance measurement sensor (70), which is configured to measure a distance between the conveyance device (10) and the accommodation device (50), in at least one of the conveyance device (10) and the accommodation device (50),
wherein the control unit (45) controls the forward movement amount of the first magnetic member (24) caused by the actuator (25), based on a measurement value of the distance measurement sensor (70).

10. The conveyance system (1A) according to Claim 2, further comprising:
a stopper, which is configured to define a distance between the conveyance device (10) and the accommodation device (50) to a predetermined length, included in at least one of the conveyance device (10) and the accommodation device (50).

11. A method for conveying a workpiece (W) using a conveyance system (1A), wherein the system (1A) including: a conveyance device (10) which is capable of elevating in a vertical direction and thereby conveying the workpiece (W) with its elevation, and an accommodation device (50) including a plurality of shelves (52) disposed so as to stack each other in the vertical direction, each of the shelves (52) is capable of accommodating the workpiece (W), and which performs bringing-in of the workpiece (W) from the conveyance device (10) to the shelf and bringing-out of the workpiece (W) from the shelf (52) to the conveyance device (10), wherein
the conveyance device (10) includes: a carrying mechanism (11) which carries-out the workpiece (W) from the accommodation device (50) and carries-in the workpiece (W) to the accommodation device (50), and an elevation mechanism (12) which elevates the carrying mechanism (11) in a vertical direction,
wherein the carrying mechanism (11) includes: a base (20) which is elevated by the elevation mechanism (12), a first conveyance portion (22) which is mounted on the base (20) and conveys the workpiece (W) between the first conveyance portion (22) and the shelves (52), a first drive motor (21A, 21B) which drives the first conveyance portion (22), a second drive motor (23) which is mounted on the base (20), a first magnetic member (24) which is rotationally driven by the second drive motor (23), and an actuator which performs moving forward the first magnetic member (24) to the accommodation device (50) and moving backward the first magnetic member (24) from the accommodation device (50),
wherein each shelf (52) of the accommodation device (50) includes: a second base (54), and a delivery mechanism (53) which delivers the workpiece (W) between the delivery mechanism (53) and the conveyance device (10),
wherein the delivery mechanism (53) includes: a second conveyance portion (56) which is mounted on the second base (54) and performs bringing-in of the workpiece (W) from the first conveyance portion (22) and bringing-out of the workpiece (W) to the first conveyance portion (22), and a second magnetic member (55) to which a rotational driving force of the first magnetic member (24) is capable of being transmitted in a non-contact manner, and which operates the second conveyance portion (56) by the rotational driving force, the method comprising:
a first movement step of elevating the the carrying mechanism (11) in the vertical direction by the elevation mechanism to position the carrying mechanism (11) at the same height as that of an arbitrary selected shelf (52) among the plurality of shelves (52);
a second movement step of operating the actuator to cause the first magnetic member (24) to approach the second magnetic member (55) while maintaining a state where the conveyance device (10) is positioned at the same height as that of the arbitrarily-selected shelf (52);
a traveling step of operating the first drive motor (21A, 21B) to travel the first conveyance portion (22) forward or backward; and
a non-contact transmission drive step of operating the second drive motor (23) to travel the second conveyance portion (56) forward or backward via the first and second magnetic members (24, 55) while maintaining a state where the first magnetic member (24) approaches the second magnetic member (55).

12. The method for conveying a workpiece (W) according to Claim 11,
wherein each shelf (52) of the accommodation device (50) further includes an abutment portion onto which the first magnetic member (24) is abutted, and
wherein the second movement step includes:
a first step of moving the first magnetic member (24) forward to the second magnetic member (55) until the first magnetic member (24) is abutted onto the abutment portion, and
a second step of driving the actuator, after the first magnetic member (24) is abutted onto the abutment portion, to move the first magnetic member (24) backward such that a predetermined gap is provided between the first magnetic member (24) and the second magnetic member (55).

13. The method for conveying a workpiece (W) according to Claim 11,
wherein each shelf (52) of the accommodation device (50) further includes an abutment portion onto which the actuator is abutted,
wherein the second movement step includes:
a third step of moving the first magnetic member (24) forward to the second magnetic member (55) until the abutment portion is abutted onto the actuator, and
a fourth step of driving the actuator, after the abutment portion is abutted onto the actuator, to move the first magnetic member (24) backward such that a predetermined gap is provided between the first magnetic member (24) and the second magnetic member (55).

14. The method for conveying a workpiece (W) according to Claim 11,
wherein the first magnetic member (24) further includes a first abutment portion which is abutted onto the accommodation device (50),
wherein each shelf (52) of the accommodation device (50) further includes a second abutment portion onto which the first abutment portion is abutted, and
wherein the second movement step includes:
a fifth step of moving the first magnetic member(24) forward to the second magnetic member (55) until the first abutment portion is abutted onto the second abutment portion, and
a sixth step of driving the actuator, after the first abutment portion is abutted onto the second abutment portion, to move the first magnetic member (24) backward such that a predetermined gap is provided between the first magnetic member (24) and the second magnetic member (55).

15. The method for conveying a workpiece (W) according to Claim 11,
wherein the second movement step includes:
a seventh step of moving the first magnetic member (24) forward to the second magnetic member (55), and
an eighth step of stopping driving of the actuator after a distance between the conveyance device (10) and the accommodation device (50) is set to a predetermined distance.

16. The method for conveying a workpiece (W) according to Claim 15,
wherein the conveyance system (10) further includes a distance measurement sensor (70), which is configured to measure a distance between the conveyance device (10) and the accommodation device (50), in at least one of the conveyance device (10) and the accommodation device (50), and
wherein the second movement step further includes a ninth step of measuring the distance between the conveyance device (10) and the accommodation device (50) by the distance measurement sensor, and
wherein the actuator is stopped driving of thereof after the distance between the conveyance device (10 and the accommodation device (50) is set to the predetermined distance based on a measurement value of the distance measurement sensor (70).

17. The method for conveying a workpiece (W) according to Claim 11,
wherein the second movement step includes:
a tenth step of moving the first magnetic member (24) forward to the second magnetic member (55), and
an eleventh step of stopping driving of the actuator after a stopper installed on one of the conveyance device (10) and the accommodation device (50) is abutted onto the other of the conveyance device (10) and the accommodation device (50) and thereby a distance between the conveyance device (10) and the accommodation device (50) is defined.

## Patentansprüche

1. Ein Fördersystem (1A), umfassend:
eine Fördervorrichtung (10), die in der Lage ist, sich in vertikaler Richtung anzuheben und dadurch ein Werkstück (W) mit ihrer Anhebung zu befördern; und
eine Unterbringungsvorrichtung (50) mit einer Vielzahl von Fächern (52), die so angeordnet sind, dass sie sich in der vertikalen Richtung übereinander stapeln, wobei jedes der Fächer (52) in der Lage ist, das Werkstück (W) aufzunehmen, und dazu eingerichtet ist, das Einbringen des Werkstücks (W) von der Fördervorrichtung (10) zu dem Fach und das Herausbringen des Werkstücks (W) von dem Fach zu der Fördervorrichtung (10) durchzuführen,
wobei die Fördervorrichtung (10) umfasst:
einen Tragmechanismus (11), der das Werkstück (W) aus der Unterbringungsvorrichtung (50) herausführt und das Werkstück (W) in die Unterbringungsvorrichtung (50) hineinführt, und einen Hebemechanismus (12), der den Tragmechanismus (11) in einer vertikalen Richtung anhebt,
wobei der Tragmechanismus (11) umfasst:
eine Basis (20), die durch den Hebemechanismus (12) angehoben wird,
einen ersten Förderabschnitt (22), der an der Basis (20) angebracht ist und das Werkstück (W) zwischen dem ersten Förderabschnitt (22) und den Fächern (52) befördert,
einen ersten Antriebsmotor (21A, 21B), der den ersten Förderabschnitt (22) antreibt,
wobei jedes Fach (52) der Unterbringungsvorrichtung (50) umfasst:
eine zweite Basis (54) und einen Zuführmechanismus (53), der das Werkstück (W) zwischen dem Zuführmechanismus (53) und der Fördervorrichtung (10) zuführt,
wobei der Zuführmechanismus (53) Folgendes umfasst:
einen zweiten Förderabschnitt (56), der an der zweiten Basis (54) angebracht ist und das Einbringen des Werkstücks (W) von dem ersten Förderabschnitt (22) und das Ausbringen des Werkstücks (W) zu dem ersten Förderabschnitt (22) durchführt, **dadurch gekennzeichnet, dass** die Fördervorrichtung ferner umfasst:
einen zweiten Antriebsmotor (23), der an der Basis (20) angebracht ist, und ein erstes magnetisches Element (24), das durch den zweiten Antriebsmotor (23) in Drehung versetzt wird, und dass jedes Fach (52) der Unterbringungsvorrichtung (50) Folgendes umfasst:
ein zweites magnetisches Element (55), auf das eine Drehantriebskraft des ersten magnetischen Elements (24) berührungslos übertragen werden kann, und das den zweiten Förderabschnitt (56) durch die Drehantriebskraft betätigt.

2. Das Fördersystem (1A) nach Anspruch 1,
wobei die Fördervorrichtung (10) ferner einen Aktuator (25) umfasst, der die Vorwärtsbewegung des ersten magnetischen Elements (24) zu der Unterbringungsvorrichtung (50) und die Rückwärtsbewegung des ersten magnetischen Elements (24) von der Unterbringungsvorrichtung (50) durchführt, und
wobei das Fördersystem (1A) ferner eine Steuereinheit (45) umfasst, die dazu eingerichtet ist, einen Vorwärtsbewegungsbetrag und einen Rückwärtsbewegungsbetrag des ersten magnetischen Elements (24) zu steuern, die durch den Aktuator (25) verursacht werden.

3. Das Fördersystem (1A) nach Anspruch 2,
wobei die Unterbringungsvorrichtung (50) einen Anlageabschnitt (62) aufweist, an dem das das erste magnetische Element (24) anliegt.

4. Das Fördersystem (1A) nach Anspruch 3,
wobei die Steuereinheit (45) dazu eingerichtet ist, den Vorwärtsbewegungsbetrag und den Rückwärtsbewegungsbetrag des ersten magnetischen Elements (24), die durch den Aktuator (25) verursacht werden, gemäß einem Zustand zu steuern, in dem das erste magnetische Element (24) über den Anlageabschnitt (62) an der Unterbringungsvorrichtung (50) anliegt.

5. Das Fördersystem (1A) nach Anspruch 2,
wobei die Unterbringungsvorrichtung (50) einen Anlageabschnitt aufweist, an dem der Aktuator (25) anliegt.

6. Das Fördersystem (1A) nach Anspruch 5,
wobei die Steuereinheit den Vorwärtsbewegungsbetrag und den des ersten magnetischen Elements (24), die durch den Aktuator (25) verursacht werden, gemäß einem Zustand steuert, in dem der Aktuator (25) über den Anlageabschnitt an der Unterbringungsvorrichtung (50) anliegt.

7. Das Fördersystem (1A) nach Anspruch 2,
wobei das erste magnetische Element (24) einen ersten Anlageabschnitt (24a) aufweist, an dem die Unterbringungsvorrichtung (50) anliegt, und
wobei die Unterbringungsvorrichtung (50) einen zweiten Anlageabschnitt (62a) aufweist, an dem der erste Anlageabschnitt (24a) anliegt.

8. Das Fördersystem (1A) nach Anspruch 7,
wobei die Steuereinheit (45) den Vorwärtsbewegungsbetrag und den Rückwärtsbewegungsbetrag des ersten magnetischen Elements (24), die durch den Aktuator (25) verursacht werden, gemäß einem Zustand steuert, in dem das erste magnetische Element (24) über den ersten und zweiten Anlageabschnitt (24a, 62a) an der Unterbringungsvorrichtung (50) anliegt.

9. Das Fördersystem (1A) nach Anspruch 2, ferner umfassend:
einen Abstandsmessungssensor (70), der dazu eingerichtet ist, den Abstand zwischen der Fördervorrichtung (10) und der Unterbringungsvorrichtung (50) in mindestens einer der Fördervorrichtung (10) und der Unterbringungsvorrichtung (50) zu messen,
wobei die Steuereinheit (45) den Vorwärtsbewegungsbetrag des ersten magnetischen Elements (24), der durch den Aktuator (25) verursacht wird, basierend auf einem Messwert des Abstandsmessungssensors (70) steuert.

10. Das Fördersystem (1A) nach Anspruch 2, ferner umfassend:
einen Stopper, der dazu eingerichtet ist, einen Abstand zwischen der Fördervorrichtung (10) und der Unterbringungsvorrichtung (50) auf eine vorbestimmte Länge zu definieren, und der in mindestens einer der Fördervorrichtung (10) und der Unterbringungsvorrichtung (50) enthalten ist.

11. Ein Verfahren zum Fördern eines Werkstücks (W) unter Verwendung eines Fördersystems (1A), wobei das System (1A) umfasst: eine Fördervorrichtung (10), die in der Lage ist, sich in einer vertikalen Richtung anzuheben und dadurch das Werkstück (W) mit ihrer Anhebung zu fördern, und eine Unterbringungsvorrichtung (50), die eine Vielzahl von Fächern (52) enthält, die so angeordnet sind, dass sie sich in der vertikalen Richtung übereinander stapeln, wobei jedes der Fächer (52) in der Lage ist, das Werkstück (W) aufzunehmen, und die das Einbringen des Werkstücks (W) von der Fördervorrichtung (10) zu dem Fach und das Herausbringen des Werkstücks (W) von dem Fach (52) zu der Fördervorrichtung (10) durchführt,
wobei die Fördervorrichtung (10) umfasst: einen Tragmechanismus (11), der das Werkstück (W) aus der Unterbringungsvorrichtung (50) herausführt und das Werkstück (W) in die Unterbringungsvorrichtung (50) hineinführt, und einen Hebemechanismus (12), der den Tragmechanismus (11) in vertikaler Richtung anhebt,
wobei der Tragmechanismus (11) umfasst: eine Basis (20), die durch den Hebemechanismus (12) angehoben wird, einen ersten Förderabschnitt (22), der an der Basis (20) angebracht ist und das Werkstück (W) zwischen dem ersten Förderabschnitt (22) und den Fächern (52) transportiert, einen ersten Antriebsmotor (21A, 21B), der den ersten Förderabschnitt (22) antreibt, einen zweiten Antriebsmotor (23), der an der Basis (20) angebracht ist, ein erstes magnetisches Element (24), das durch den zweiten Antriebsmotor (23) drehend angetrieben wird, und einen Aktuator, der die Vorwärtsbewegung des ersten magnetischen Elements (24) zu der Unterbringungsvorrichtung (50) und die Rückwärtsbewegung des ersten magnetischen Elements (24) von der Unterbringungsvorrichtung (50) ausführt,
wobei jedes Fach (52) der Unterbringungsvorrichtung (50) umfasst: eine zweite Basis (54) und einen Zuführmechanismus (53), der das Werkstück (W) zwischen dem Zuführmechanismus (53) und der Fördervorrichtung (10) zuführt,
wobei der Zuführmechanismus (53) umfasst: einen zweiten Förderabschnitt (56), der an der zweiten Basis (54) angebracht ist und das Einbringen des Werkstücks (W) von dem ersten Förderabschnitt (22) und das Ausbringen des Werkstücks (W) zu dem ersten Förderabschnitt (22) durchführt, und ein zweites magnetisches Element (55), auf das die Drehantriebskraft des ersten magnetischen Elements (24) berührungslos übertragen werden kann und das den zweiten Förderabschnitt (56) durch die Drehantriebskraft betätigt, wobei das Verfahren umfasst:
einen ersten Bewegungsschritt des Anhebens des Tragmechanismus (11) in der vertikalen Richtung durch den Hebemechanismus, um den Tragmechanismus (11) in der gleichen Höhe wie ein beliebig ausgewähltes Fach (52) aus der Vielzahl von Fächern (52) zu positionieren;
einen zweiten Bewegungsschritt des Betätigens des Aktuators, um das erste magnetische Element (24) zu veranlassen, sich dem zweiten magnetischen Element (55) zu nähern, während ein Zustand beibehalten wird, in dem die Fördervorrichtung (10) auf derselben Höhe wie das beliebig ausgewählte Fach (52) positioniert ist;
einen Fahrschritt zum Betätigen des ersten Antriebsmotors (21A, 21B), um den ersten Förderabschnitt (22) vorwärts oder rückwärts zu bewegen; und
einen berührungslosen Übertragungs-Antriebsschritt zum Betreiben des zweiten Antriebsmotors (23), um den zweiten Förderabschnitt (56) über das erste und zweite magnetische Element (24, 55) vorwärts oder rückwärts zu bewegen, während ein Zustand aufrechterhalten wird, in dem sich das erste magnetische Element (24) dem zweiten magnetischen Element (55) nähert.

12. Das Verfahren zum Fördern eines Werkstücks (W) nach Anspruch 11,
wobei jedes Fach (52) der Unterbringungsvorrichtung (50) ferner einen Anlageabschnitt aufweist, an dem das erste magnetische Element (24) anliegt, und
wobei der zweite Bewegungsschritt umfasst:
einen ersten Schritt des Bewegens des ersten magnetischen Elements (24) vorwärts zu dem zweiten magnetischen Element (55), bis das erste magnetische Element (24) an dem Anlageabschnitt anliegt, und
einen zweiten Schritt des Antreibens des Aktuators, nachdem das erste magnetische Element (24) an dem Anlageabschnitt anliegt, um das erste magnetische Element (24) rückwärts zu bewegen, so dass sich ein vorbestimmter Spalt zwischen dem ersten magnetischen Element (24) und dem zweiten magnetischen Element (55) bildet.

13. Das Verfahren zum Fördern eines Werkstücks (W) nach Anspruch 11,
wobei jedes Fach (52) der Unterbringungsvorrichtung (50) ferner einen Anlageabschnitt aufweist, an dem dar Aktuator anliegt,
wobei der zweite Bewegungsschritt umfasst:
einen dritten Schritt des Bewegens des ersten magnetischen Elements (24) vorwärts zu dem zweiten magnetischen Element (55), bis der Anlageabschnitt an dem Aktuator anliegt, und
einen vierten Schritt des Antreibens des Aktuators, nachdem der Anschlagabschnitt an dem Aktuator anliegt, um das erste magnetische Element (24) nach hinten zu bewegen, so dass sich ein vorbestimmter Spalt zwischen dem ersten magnetischen Element (24) und dem zweiten magnetischen Element (55) bildet.

14. Das Verfahren zum Fördern eines Werkstücks (W) nach Anspruch 11,
wobei das erste magnetische Element (24) ferner einen ersten Anlageabschnitt aufweist, der an der Unterbringungsvorrichtung (50) anliegt,
wobei jedes Fach (52) der Unterbringungsvorrichtung (50) weiterhin einen zweiten Anlageabschnitt aufweist, an den der erste Anlageabschnitt anliegt, und wobei der zweite Bewegungsschritt umfasst:
einen fünften Schritt des Bewegens des ersten magnetischen Elements (24) vorwärts zu dem zweiten magnetischen Element (55), bis der erste Anlageabschnitt an dem zweiten Anlageabschnitt anliegt, und
einen sechsten Schritt des Antreibens des Aktuators, nachdem der erste Anlageabschnitt an dem zweiten Anlageabschnitt anliegt, um das erste magnetische Element (24) nach hinten zu bewegen, so dass sich ein vorbestimmter Spalt zwischen dem ersten magnetischen Element (24) und dem zweiten magnetischen Element (55) bildet.

15. Das Verfahren zum Fördern eines Werkstücks (W) nach Anspruch 11,
wobei der zweite Bewegungsschritt umfasst:
einen siebten Schritt des Vorwärtsbewegens des ersten magnetischen Elements (24) zum zweiten magnetischen Element (55), und
einen achten Schritt des Anhaltens des Antriebs des Aktuators, nachdem ein Abstand zwischen der Fördervorrichtung (10) und der Unterbringungsvorrichtung (50) auf einen vorbestimmten Abstand eingestellt ist.

16. Das Verfahren zum Fördern eines Werkstücks (W) nach Anspruch 15,
wobei das Fördersystem (10) ferner einen Abstandsmessungssensor (70) umfasst, der zum Messen des Abstands zwischen der Fördervorrichtung (10) und der Unterbringungsvorrichtung (50) eingerichtet ist, in mindestens einer der Fördervorrichtung (10) und der Unterbringungsvorrichtung (50), und
wobei der zweite Bewegungsschritt ferner einen neunten Schritt des Messens des Abstands zwischen der Fördervorrichtung (10) und der Unterbringungsvorrichtung (50) durch den Abstandsmessungssensor umfasst, und
wobei der Antrieb des Aktuators basierend auf einem Messwert des Abstandsmessungssensor (70) gestoppt wird, nachdem der Abstand zwischen der Fördervorrichtung (10) und der Unterbringungsvorrichtung (50) auf den vorbestimmten Abstand eingestellt ist.

17. Das Verfahren zum Fördern eines Werkstücks (W) nach Anspruch 11,
wobei der zweite Bewegungsschritt umfasst:
einen zehnten Schritt des Vorwärtsbewegens des ersten magnetischen Elements (24) zum zweiten magnetischen Element (55), und
einen elften Schritt des Anhaltens des Antriebs des Aktuators, nachdem ein Stopper, der entweder an der Fördervorrichtung (10) oder an der Unterbringungsvorrichtung (50) installiert ist, an der entsprechend anderen der Fördervorrichtung (10) und der Unterbringungsvorrichtung (50) anliegt und dadurch ein Abstand zwischen der Fördervorrichtung (10) und der Unterbringungsvorrichtung (50) definiert ist.

## Revendications

1. Ensemble de transport (1A), comprenant :
un dispositif de transport (10) qui peut s'élever dans une direction verticale et ainsi transporter une pièce d'œuvre (W) avec son élévation ; et
un dispositif de réception (50) comportant une pluralité d'étagères (52) disposées de manière à s'empiler l'une sur l'autre dans la direction verticale, chacune des étagères (52) pouvant recevoir la pièce d'œuvre (W), et qui est configuré de manière mettre en œuvre le stockage de la pièce d'œuvre (W) à partir du dispositif de transport (10) vers l'étagère et le déstockage de la pièce d'œuvre (W) à partir de l'étagère vers le dispositif de transport (10),
dans lequel
le dispositif de transport (10) comporte :
un mécanisme de transport (11) qui décharge la pièce d'œuvre (W) à partir du dispositif de réception (50) et charge la pièce d'œuvre (W) dans le dispositif de réception (50), et un mécanisme de levage (12) qui soulève le mécanisme de transport (11) dans une direction verticale,
dans lequel le mécanisme de transport (11) comporte :
une base (20) qui est soulevée par le mécanisme de levage (12),
une première partie de transport (22) qui est montée sur la base (20) et transporte la pièce d'œuvre (W) entre la première partie de transport (22) et les étagères (52),
un premier moteur d'entraînement (21A, 21B) qui entraîne la première partie de transport (22),
dans lequel chaque étagère (52) du dispositif de réception (50) comporte :
une seconde base (54) et un mécanisme de distribution (53) qui délivre la pièce d'œuvre (W) entre le mécanisme de distribution (53) et le dispositif de transport (10),
dans lequel le mécanisme de distribution (53) comporte :
une seconde partie de transport (56) qui est montée sur la seconde base (54) et exécute un stockage de la pièce d'œuvre (W) à partir de la première partie de transport (22) et un déstockage de la pièce d'œuvre (W) vers la première partie de transport (22), et **caractérisé en ce que**
le dispositif de transport comporte, en outre :
un second moteur d'entraînement (23) qui est monté sur la base (20), et
un premier élément magnétique (24) qui est entraîné en rotation par le second moteur d'entraînement (23), et **en ce que**
chaque étagère (52) du dispositif de réception (50) comporte :
un second élément magnétique (55) auquel un effort d'entraînement en rotation du premier élément magnétique (24) peut être transmis d'une manière sans contact, et qui active la seconde partie de transport (56) compte tenu de l'effort d'entraînement en rotation.

2. Ensemble de transport (1A) selon la revendication 1,
dans lequel le dispositif de transport (10) comporte, en outre, un actionneur (25) qui assure le déplacement vers l'avant du premier élément magnétique (24) vers le dispositif de réception (50) et le déplacement vers l'arrière du premier élément magnétique (24) à partir du dispositif de réception (50), et
dans lequel l'ensemble de transport (1A) comprend, en outre, une unité de commande (45) qui est configurée de manière à commander une longueur de déplacement vers l'avant et une longueur de déplacement vers l'arrière du premier élément magnétique (24) assurées par l'actionneur (25).

3. Ensemble de transport (1A) selon la revendication 2,
dans lequel le dispositif de réception (50) comporte une partie de butée (62) sur laquelle le premier élément magnétique (24) est mis en butée.

4. Ensemble de transport (1A) selon la revendication 3,
dans lequel l'unité de commande (45) est configurée de manière à commander la longueur de déplacement vers l'avant et la longueur de déplacement vers l'arrière du premier élément magnétique (24) assurées par l'actionneur (25), en fonction d'un état dans lequel le premier élément magnétique (24) est mis en butée sur le dispositif de réception (50) par l'intermédiaire de la partie de butée (62).

5. Ensemble de transport (1A) selon la revendication 2,
dans lequel le dispositif de réception (50) comporte une partie de butée sur laquelle l'actionneur (25) est mis en butée.

6. Ensemble de transport (1A) selon la revendication 5,
dans lequel l'unité de commande commande la longueur de déplacement vers l'avant et la longueur de déplacement vers l'arrière du premier élément magnétique (24) assurées par l'actionneur (25), en fonction d'un état dans lequel l'actionneur (25) est mis en butée sur le dispositif de réception (50) par l'intermédiaire de la partie de butée.

7. Ensemble de transport (1A) selon la revendication 2,
dans lequel le premier élément magnétique (24) comporte une première partie de butée (24a) sur laquelle le dispositif de réception (50) est mis en butée, et
dans lequel le dispositif de réception (50) comporte une seconde partie de butée (62a) sur laquelle la première partie de butée (24a) est mis en butée.

8. Ensemble de transport (1A) selon la revendication 7,
dans lequel l'unité de commande (45) commande la longueur de déplacement vers l'avant et la longueur de déplacement vers l'arrière du premier élément magnétique (24) assurées par l'actionneur (25), en fonction d'un état dans lequel le premier élément magnétique (24) est mis en butée sur le dispositif de réception (50) par l'intermédiaire des première et seconde parties de butée (24a, 62a).

9. Ensemble de transport (1A) selon la revendication 2, comprenant, en outre :
un capteur de mesure de distance (70), qui est configuré de manière à mesurer une distance entre le dispositif de transport (10) et le dispositif de réception (50), sur au moins l'un du dispositif de transport (10) et du dispositif de réception (50),
dans lequel l'unité de commande (45) commande la longueur de déplacement vers l'avant du premier élément magnétique (24) assurée par l'actionneur (25), sur la base d'une valeur mesurée par le capteur de mesure de distance (70).

10. Ensemble de transport (1A) selon la revendication 2, comprenant, en outre :
une butée, qui est configurée de manière à définir une distance entre le dispositif de transport (10) et le dispositif de réception (50) à une longueur prédéterminée, intégrée sur au moins l'un du dispositif de transport (10) et du dispositif de réception (50).

11. Procédé de transport d'un pièce d'œuvre (W) en utilisant un ensemble de transport (1A), dans lequel l'ensemble (1A) comporte : un dispositif de transport (10) qui peut s'élever dans une direction verticale et ainsi de transporter la pièce d'œuvre (W) avec son élévation, et un dispositif de réception (50) comportant une pluralité d'étagères (52) disposées afin de s'empiler l'une sur l'autre dans la direction verticale, chacune des étagères (52) pouvant recevoir la pièce d'œuvre (W), et qui exécute le stockage de la pièce d'œuvre (W) à partir du dispositif de transport (10) vers l'étagère et le déstockage de la pièce d'œuvre (W) à partir de l'étagère (52) vers le dispositif de transport (10),
dans lequel le dispositif de transport (10) comporte : un mécanisme de transport (11) qui décharge la pièce d'œuvre (W) à partir du dispositif de réception (50) et charge la pièce d'œuvre (W) sur le dispositif de réception (50), et un mécanisme de levage (12) qui soulève le mécanisme de transport (11) dans une direction verticale,
dans lequel le mécanisme de transport (11) comporte: une base (20) qui est soulevée par le mécanisme de levage (12), une première partie de transport (22) qui est montée sur la base (20) et transporte la pièce d'œuvre (W) entre la première partie de transport (22) et les étagères (52), un premier moteur d'entraînement (21A, 21B) qui entraîne la première partie de transport (22), un second moteur d'entraînement (23) qui est monté sur la base (20), un premier élément magnétique (24) qui est entraîné en rotation par le second moteur d'entraînement (23), et un actionneur qui exécute un déplacement vers l'avant du premier élément magnétique (24) vers le dispositif de réception (50) et un déplacement vers l'arrière du premier élément magnétique (24) à partir du dispositif de réception (50),
dans lequel chaque étagère (52) du dispositif de réception (50) comporte : une seconde base (54) et un mécanisme de distribution (53) qui délivre la pièce d'œuvre (W) entre le mécanisme de distribution (53) et le dispositif de transport (10),
dans lequel le mécanisme de distribution (53) comporte : une seconde partie de transport (56) qui est montée sur la seconde base (54) et exécute le stockage de la pièce d'œuvre (W) à partir de la première partie de transport (22) et le déstockage de la pièce d'œuvre (W) vers la première partie de transport (22), et un second élément magnétique (55) sur lequel un effort d'entraînement en rotation du premier élément magnétique (24) peut être transmis d'une manière sans contact, et qui active la seconde partie de transport (56) compte tenu de l'effort d'entraînement en rotation, le procédé comprenant :
une première étape de déplacement destinée à assurer l'élévation du mécanisme de transport (11) dans la direction verticale par le mécanisme de levage afin de positionner le mécanisme de transport (11) à la même hauteur que celle d'une étagère (52) sélectionnée arbitrairement parmi la pluralité d'étagères (52) ;
une deuxième étape de déplacement destinée à activer l'actionneur de manière à provoquer le rapprochement par le premier élément magnétique (24) du second élément magnétique (55) tout en maintenant un état dans lequel le dispositif de transport (10) est positionné à la même hauteur que celle de l'étagère (52) sélectionnée arbitrairement ;
une étape de déplacement destinée à activer le premier moteur d'entraînement (21A, 21B) de manière à déplacer la première partie de transport (22) vers l'avant ou vers l'arrière ; et
une étape d'entraînement à transmission sans contact destinée à activer le second moteur d'entraînement (23) de manière à déplacer la seconde partie de transport (56) vers l'avant ou vers l'arrière par l'intermédiaire des premier et second éléments magnétiques (24, 55) tout en maintenant un état dans lequel le premier élément magnétique (24) se rapproche du second élément magnétique (55).

12. Procédé de transport d'un pièce d'œuvre (W) selon la revendication 11,
dans lequel chaque étagère (52) du dispositif de réception (50) comporte, en outre, une partie de butée sur laquelle le premier élément magnétique (24) est en butée, et
dans lequel la deuxième étape de déplacement comporte :
une première étape de déplacement du premier élément magnétique (24) vers l'avant, vers le second élément magnétique (55) jusqu'à ce que le premier élément magnétique (24) vienne en butée sur la partie de butée, et
une deuxième étape d'entraînement de l'actionneur, après que le premier élément magnétique (24) a été mis en butée sur la partie de butée, afin de déplacer le premier élément magnétique (24) vers l'arrière de telle sorte qu'un jeu prédéterminé se forme entre le premier élément magnétique (24) et le second élément magnétique (55).

13. Procédé de transport d'un pièce d'œuvre (W) selon la revendication 11,
dans lequel chaque étagère (52) du dispositif de réception (50) comporte, en outre, une partie de butée sur laquelle l'actionneur est en butée,
dans lequel la deuxième étape de déplacement comporte :
une troisième étape de déplacement du premier élément magnétique (24) vers l'avant, vers le second élément magnétique (55) jusqu'à ce que la partie de butée vienne en butée sur l'actionneur, et
une quatrième étape d'entraînement de l'actionneur, après que la partie de butée a été mise en butée sur l'actionneur, afin de déplacer le premier élément magnétique (24) vers l'arrière de telle sorte qu'un jeu prédéterminé se forme entre le premier élément magnétique (24) et le second élément magnétique (55).

14. Procédé de transport d'un pièce d'œuvre (W) selon la revendication 11, dans lequel le premier élément magnétique (24) comporte, en outre, une première partie de butée qui est mise en butée sur le dispositif de réception (50),
dans lequel chaque étagère (52) du dispositif de réception (50) comporte, en outre, une seconde partie de butée sur laquelle la première partie de butée est mise en butée, et
dans lequel la deuxième étape de déplacement comporte :
une cinquième étape de déplacement du premier élément magnétique (24) vers l'avant, vers le second élément magnétique (55) jusqu'à ce que la première partie de butée soit mise en butée sur la seconde partie de butée, et
une sixième étape d'entraînement de l'actionneur, après que la première partie de butée a été mise en butée sur la seconde partie de butée, de manière à déplacer le premier élément magnétique (24) vers l'arrière de telle sorte qu'un jeu prédéterminé se forme entre le premier élément magnétique (24) et le second élément magnétique (55).

15. Procédé de transport d'un pièce d'œuvre (W) selon la revendication 11, dans lequel la deuxième étape de déplacement comporte :
une septième étape de déplacement du premier élément magnétique (24) vers l'avant, vers le second élément magnétique (55), et
une huitième étape d'arrêt d'entraînement de l'actionneur après qu'une distance entre le dispositif de transport (10) et le dispositif de réception (50) a été réglée à une distance prédéterminée.

16. Procédé de transport d'un pièce d'œuvre (W) selon la revendication 15,
dans lequel l'ensemble de transport (10) comporte, en outre, un capteur de mesure de distance (70), qui est configuré de manière à mesurer une distance entre le dispositif de transport (10) et le dispositif de réception (50), sur au moins l'un du dispositif de transport (10) et du dispositif de réception (50), et
dans lequel la deuxième étape de déplacement comporte, en outre, une neuvième étape de mesure de la distance entre le dispositif de transport (10) et le dispositif de réception (50) par le capteur de mesure de distance, et
dans lequel l'entraînement de l'actionneur est arrêté après que la distance entre le dispositif de transport (10) et le dispositif de réception (50) a été réglée à la distance prédéterminée sur la base d'une valeur mesurée par le capteur de mesure de distance (70).

17. Procédé de transport d'un pièce d'œuvre (W) selon la revendication 11, dans lequel la deuxième étape de déplacement comporte :
une dixième étape de déplacement du premier élément magnétique (24) vers l'avant, vers le second élément magnétique (55), et
une onzième étape d'arrêt d'entraînement de l'actionneur après qu'une butée installée sur l'un du dispositif de transport (10) et du dispositif de réception (50) a été mise en butée sur l'autre du dispositif de transport (10) et du dispositif de réception (50) et ainsi, qu'une distance entre le dispositif de transport (10) et le dispositif de réception (50) a été réglée.
